# DEMANDE DE BREVET EUROPEEN

(11) **EP 3 015 165 A1**
(43) Date de publication de la demande: **04.05.2016**
(21) Numéro de dépôt: 15192395.0
(22) Date de dépôt: 30.10.2015
(51) Int. Cl.: B01J 20/06, B01J 20/10, B01J 20/28, B01J 20/32, G01N 21/77, G01N 21/78, G01N 31/22

(54) **MATÉRIAU ET PROCÉDÉ POUR PIÉGER, DÉTECTER ET QUANTIFIER DES COMPOSÉS SOUFRÉS VOLATILS**

(30) Priorité: 31.10.2014 FR 1460534
(71) Demandeur: Commissariat à l'Énergie Atomique et aux Énergies Alternatives, 75015 Paris (FR)
(72) Inventeur: Marcoux, Pierre, 38120 Saint-Egrève (FR); Guillemot, Laure-Hélène, 75017 Paris (FR); Buniazet, Zoé, 07130 Saint-Peray (FR); Vrignaud, Marjorie, 49400 Bagneux (FR)
(74) Mandataire: Brevalex

(57) **Abrégé**

La présente invention concerne l'utilisation d'un matériau de type oxyde poreux et notamment un matériau sol-gel poreux comprenant, comme molécule-sonde, au moins un disulfure aromatique substitué par au moins un groupement électroattracteur pour piéger et/ou détecter et éventuellement quantifier au moins un composé soufré volatil. La présente invention concerne également un matériau sol-gel poreux particulier, un système de détection contenant un tel matériau et son procédé de préparation.

## Description

### DOMAINE TECHNIQUE

La présente invention appartient au domaine de la chimie analytique et, plus particulièrement, au domaine de la détection et éventuellement de la quantification de composés soufrés en phase gazeuse désignés par l'abréviation anglaise VSC pour « Volatile Sulfur Compounds ».

Plus particulièrement, la présente invention propose un dispositif et un procédé aptes à détecter et éventuellement à quantifier des composés soufrés volatils tels que, par exemple, le sulfure d'hydrogène (H₂S), le sulfure de diméthyle ((CH₃)₂S ou Me₂S) et les thiols (R-SH) volatils.

### ÉTAT DE LA TECHNIQUE ANTÉRIEURE

L'intérêt pour le dosage du sulfure d'hydrogène à faibles concentrations ne cesse de croître car cette détection trouve des applications dans de nombreux domaines comme l'évaluation de la qualité de l'air (nuisance olfactive près des usines ou des étangs), le rendement de certains procédés catalytiques, le sulfure d'hydrogène étant un poison de catalyseur, la sécurité (sur les plateformes pétrolières), ou encore l'étude de la mauvaise haleine (halitose).

En effet, le sulfure d'hydrogène est un gaz incolore produit en grande quantité par les activités industrielles comme le raffinage du pétrole et l'exploitation du gaz naturel. Les sources de pétrole brut présentent de 0,3 à 0,8% massique du H₂S suivant leur provenance, tandis que le gaz naturel en contient de 0,01 à 30% massique suivant son origine [1]. Ce problème sera croissant car une augmentation systématique du taux de soufre dans les approvisionnements a été constatée ces dernières décennies, qu'il s'agisse du pétrole ou du gaz naturel. Rapidement absorbé via les voies respiratoires, le sulfure d'hydrogène est la 1^{ère} cause de mortalité par accident du travail. Bien que l'odorat humain puisse détecter des concentrations en sulfure d'hydrogène aussi faibles que 20 à 100 ppb, il existe un phénomène de saturation des récepteurs olfactifs à partir de 5 ppm [1] : au-delà de cette valeur, ce gaz est inodore alors même qu'il est présent à des concentrations déjà toxiques pour le personnel. Son seuil de toxicité est de 10 ppm (ou 14 mg/m³*)*, tandis qu'une exposition prolongée à forte concentration (100 à 150 ppm) entraîne une paralysie du nerf olfactif. Au-delà de cette concentration, une paralysie respiratoire survient, entraînant l'asphyxie et la mort.

Dans un autre contexte industriel à savoir les industries du papier et du cuir, les effluents peuvent être chargés en sulfures. Il devient alors important de contrôler la quantité présente dans l'atmosphère de travail. Dans l'industrie chimique, le sulfure d'hydrogène est utilisé (i) pour la préparation d'acide sulfurique, un composé de base en chimie lourde ; (ii) pour la préparation de composés organiques soufrés tels que les thiols et les additifs pour lubrifiants ; (iii) pour la production d'eau lourde ; (iv) dans la métallurgie, pour l'élimination de certaines impuretés par précipitation des sulfures métalliques ; et (v) dans la vulcanisation du caoutchouc et la fabrication de la viscose.

Pour rappel également, bon nombre de bactéries, notamment en conditions anaérobies, produisent du sulfure d'hydrogène et des VSC. Cela explique pourquoi des travailleurs peuvent être exposés à ces gaz toxiques lors de travaux dans des fosses septiques, des égouts et stations d'épuration (en particulier lors de traitements acides), ou lors du ramassage d'algues sur les plages (dégradation de ces algues en anaérobiose).

De plus, les salmonelles représentent la cause la plus fréquente d'infections bactériennes d'origine alimentaire. Les sociétés impliquées dans de tels épisodes subissent des répercussions financières parfois très importantes : procédures de rappel des lots contaminés, impact négatif sur l'image de marque des sociétés, baisse des ventes et du cours des actions. Dans le cas où des victimes sont à déplorer, les sociétés sont attaquées en justice et s'exposent à devoir verser des dommages et intérêt colossaux. Parmi les quelques caractères biochimiques caractéristiques du genre *Salmonella* on peut trouver notamment l'émission de sulfure d'hydrogène. Les milieux gélosés employés pour confirmer la présence de salmonelles, comme la gélose XLD (pour « (Xylose-Lysine-Désoxycholate ») par exemple, contiennent du citrate de fer qui provoque la coloration des colonies bactériennes en noir si elles émettent du sulfure d'hydrogène (précipitation de FeS). Ainsi, une des méthodes normalisées de détection de *Salmonella* en matrice alimentaire fait intervenir plusieurs étapes et nécessite beaucoup de main d'oeuvre. La 1^{ère} de ces étapes consiste en un enrichissement non sélectif permettant de remettre en conditions favorables de croissance des bactéries généralement stressées (température du frigo, présence d'antibactériens, de conservateurs dans les aliments, etc.). Cette 1^{ère} étape est suivie d'un enrichissement sélectif qui favorise le pathogène cible au détriment des autres espèces comme la flore annexe. Une dernière étape d'isolement sur un milieu gélosé permet de confirmer un résultat positif à l'issue de l'enrichissement sélectif. Cependant, la très grande majorité des tests sont négatifs, c'est pourquoi bon nombre d'enrichissements sélectifs et isolements sont inutiles.

Les principaux VSC intéressants en microbiologie sont le sulfure d'hydrogène (H₂S), le méthanethiol ((CH₃)SH), le sulfure de diméthyle ((CH₃)₂S), le disulfure de diméthyle ((CH₃)SS(CH₃)), le trisulfure de diméthyle ((CH₃)SSS(CH₃)), le 2-méthyl-3-furanthiol (C₅H₆OS), le 3-(mercapto)hexylacetate (C₃H₇CH(SH)C₂H₄OC(O)CH₃) et le 3-mercaptohexan-1-ol (C₃H₇CH(SH)C₂H₄OH). Ils constituent, par exemple, un des principaux agents de saveur des vins et des fromages. En effet, ils sont produits par les bactéries acidolactiques (les genres *Lactococcus* et *Lactobacillus* par exemple), ainsi que des espèces intervenant dans la maturation du fromage (les genres *Brevibacterium, Corynebacterium, Micrococcus, Staphylococcus, Arthrobacter* par exemple) **[2].** Un capteur de VSC pourrait alors trouver son application dans la stabilisation d'un processus de fermentation, afin de rendre plus reproductible la saveur du produit final.

Enfin, en médecine dentaire, les VSC jouent un rôle important : des composés tels que le sulfure d'hydrogène et le méthanethiol sont très toxiques et sont les principaux responsables de la mauvaise haleine, notamment le méthanethiol **[3].** Différentes espèces telles que *Porphyromonas gingivalis* ou *Fusobacterium nucleatum* produisent des VSC en grandes quantités. Or la présence de ces composés volatils dans la cavité buccale peut entraîner des inflammations, allant jusqu'à des saignements, des abcès, voire des nécroses.

Les VSC, et notamment le sulfure d'hydrogène, sont des gaz pour lesquels il existe des techniques de détection nombreuses et variées : spectroscopiques, électrochimiques, chromatographiques, etc.

Les détecteurs électrochimiques de sulfure d'hydrogène commerciaux reposent principalement sur deux technologies impliquant toutes deux une oxydation du H₂S, soit à la surface d'une membrane poreuse, soit à la surface d'un oxyde métallique dans les capteurs MOS (pour « *Metal Oxide Semiconductors* »)*.*

Les capteurs électrochimiques présentent de nombreux avantages : miniaturisables et sensibles, ils peuvent fonctionner à température ambiante. Leur principe repose sur la diffusion du sulfure d'hydrogène à travers une membrane perméable aux gaz, mais pas au liquide. Après passage à travers cette membrane, le gaz se retrouve dans une cellule électrochimique à 3 électrodes où il est oxydé. La détection par électrochimie se déroule en solution et nécessite un électrolyte support. Pour remédier au manque de sélectivité de ces méthodes, les capteurs sont équipés de membranes perméables souvent à base de polymères. Les méthodes électrochimiques existantes en solution ne sont pas transposables à la détection d'espèces gazeuses. En effet, l'air n'est pas conducteur. Certains auteurs comme Schiavon *et al* **[4]** s'affranchissent du support électrolytique en utilisant un support poreux et conducteur qui sert à la fois d'électrode de travail et de couche sensible (membrane poreuse de Nafion recouverte d'argent). Une limite de détection de l'ordre de 45 ppb est atteinte, pour un temps de réponse de 0,5 s **[4].** La formation de bulles de gaz au niveau de la membrane entraîne, cependant, des résultats non reproductibles **[5].**

Les capteurs MOS, à base d'oxydes métalliques semiconducteurs, sont utilisés dans les nez électroniques commerciaux ou encore dans la surveillance en continu de procédés industriels. La détection du sulfure d'hydrogène s'y fait en phase gazeuse, grâce à l'affinité de ce dernier pour des oxydes métalliques tels que SnO₂, ZnO, TiO₂, Fe₂O₃, WO₃ ou encore In₂O₃ **[6,7].** En s'adsorbant à la surface du MOS, le gaz est oxydé et les charges ainsi créées participent à la formation d'un signal électrique de transduction. Ces nez sont sensibles mais encombrants et chers. Comme les nanotubes de carbone présentent un grand rapport surface/volume, des nanotubes d'oxydes métalliques sont aussi étudiés pour des applications de capteurs gaz **[8].** Toutefois, à ce jour, les capteurs utilisant les nanotubes de carbone mentionnés dans la littérature peuvent être sélectifs mais leur limite de détection est élevée (50 ppm pour le H₂S) **[9].**

Plusieurs méthodes analytiques comme la chromatographie en phases liquide et gazeuse ont été mises au point pour la détection de VSC **[10].** Ces méthodes sont généralement chronophages et nécessitent une préparation d'échantillon, un équipement coûteux ainsi qu'un technicien qualifié. Or, aujourd'hui les nouveaux capteurs visent une haute sensibilité, une rapidité de réponse, une facilité d'emploi et un bas coût.

Les méthodes optiques sont séduisantes car elles allient sensibilité, simplicité, bas coût et facilité d'utilisation **[11].** On peut ainsi trouver dans la littérature une « version optique » des nez électroniques à base de capteurs MOS. Ces nez artificiels à transduction optique reposent sur un support papier imprégné de différents colorants **[12].** Chacun d'entre eux va voir sa couleur affectée après interaction avec un gaz ou mélange de gaz. Un simple scanner optique permet de cartographier et de quantifier les changements de couleur de chacun des colorants sondes déposés. Un tel capteur est certes bas coût et peu encombrant, mais sa réponse est complexe à analyser car non linéaire et tout se complique particulièrement en présence de mélanges de gaz. En effet, chacun des spots de colorants interagit avec tous les gaz d'un mélange, et chaque analyte gazeux d'un mélange interagit avec tous les colorants sondes. C'est pourquoi il vaut mieux préférer une réaction sonde-cible qui soit la plus spécifique possible.

La très faible solubilité et la forte absorbance des sulfures métalliques a permis depuis longtemps le développement de nombreuses méthodes par transduction optique où le VSC cible réagit sur un support imprégné de sel métallique pour former un précipité. Un des capteurs utilisant une telle réaction est le SafeAir^{®}, commercialisé par la société américaine Morphix Technologies. Ce capteur se présente sous forme d'un badge, de type dosimètre, comportant une membrane imprégnée de sels métalliques qui change de couleur après avoir capturé une certaine quantité de sulfure d'hydrogène. Ce capteur est protégé par deux brevets de 1994 et 2001 **[13,14].** La formation d'un précipité de sulfure métallique est aussi à la base d'autres capteurs, tels que des bandelettes en papier imprégnées d'acétate de plomb ou de nitrate d'argent **[15],** des matrices en chitosan dopées au FeSO₄, **[16]** ou encore des films minces de colloïdes d'argent **[17].** Toutefois, nombre de ces dispositifs sont sensibles à l'humidité, à la lumière et/ou contiennent des métaux lourds. Enfin, la formation d'un précipité ne permet pas d'obtenir une mesure quantitative.

En ce qui concerne la détection en fluorescence, on peut envisager deux modes de réalisation: la réaction sonde-cible peut produire un composé fluorescent ou, à l'inverse, l'interaction d'une sonde fluorescente avec la cible peut entraîner une baisse de sa fluorescence. On parle alors de détection par inhibition de fluorescence. Dans ce cas, la sonde fluorescente peut être une molécule, comme une thionine **[18]** ou une fluorescéine modifiée à l'acétate de mercure **[19],** ou un solide colloïdal, comme des nanoparticules de CdSe **[20].** L'inhibition de fluorescence est un mode de détection peu sensible, excepté celle qui emploie les nanoparticules, malheureusement les deux éléments qui les composent, Cd et Se, sont particulièrement toxiques. L'apparition d'une fluorescence donne une limite de détection bien meilleure, de l'ordre du ppb, mais fait appel à la complexation d'ions mercure, un métal également toxique **[21].**

Comme pour la détection en fluorescence, deux modes de transduction sont possibles avec l'absorbance : soit par baisse de l'absorbance de la molécule sonde, soit par formation d'un produit coloré. Par exemple, le sulfure d'hydrogène gazeux peut être détecté en suivant la décoloration d'une molécule sonde, la 2,6-dichloroindophénol, incorporée dans un sol-gel. Cette molécule, lorsqu'elle est réduite par le sulfure d'hydrogène, donne un composé incolore, ce qui permet une détection entre 10 ppb et 1 ppm dans l'haleine d'un patient **[22].** Avec ce même principe de réduction d'une sonde colorée en un produit incolore, la toluidine a été employée pour détecter du H₂S **[23].**

Certains indicateurs colorimétriques redox possèdent des formes oxydée et réduite toutes deux absorbantes dans le visible. C'est le cas de la résazurine, bleue sous forme oxydée, qui, réduite en résorufine par le sulfure d'hydrogène, devient rose **[24].** Les ions cuivre peuvent également former des complexes dont le spectre d'absorbance change suivant l'état d'oxydation du cuivre. Ainsi des films minces de polymère du type polysiloxane avec des fonctions acrylates ont été dopés à hauteur de 3% avec un complexe de Cu^{II} absorbant à 350 nm. La réduction de Cu^{II} en Cu^{I} par le sulfure d'hydrogène entraîne la formation du complexe de Cu^{I}, qui lui absorbe à 464 nm **[25].** De tels films permettent de détecter 10 ppm de H₂S gazeux en 10 min. D'autres exemples impliquant des complexes de cuivre en tant que molécule sonde sont relatés dans la littérature, comme la réduction de néocuproïne de Cu^{II} (vert) en néocuproïne de Cu^{I} (jaune) **[26],** ou encore la réduction par du sulfure d'hydrogène ou du méthanethiol de complexes de Cu^{I} porteurs de groupements perfluorés **[27].** Malheureusement, toutes ces méthodes sont basées sur une réaction redox peu spécifique : d'autres réducteurs plus forts que le sulfure d'hydrogène peuvent interférer en réduisant également le complexe qui sert de sonde. En outre, la toxicité des complexes du cuivre est aujourd'hui reconnue. On peut enfin mentionner un exemple de détection en luminescence, avec différents substrats solides (gel de silice, craie, alumine, etc.) imprégnés de dichlorure de cadmium **[28].** Là aussi, la toxicité des sels de cadmium est un inconvénient majeur pour ce type de détecteur.

Pour parvenir à un capteur de VSC par transduction optique, il faut donc (1) une molécule sonde qui réagisse le plus sélectivement possible avec les composés soufrés cibles pour former un produit dont les propriétés optiques (fluorescence, absorbance, luminescence) sont différentes de celles à la fois de la sonde et de la cible ; (2) un support solide à la surface duquel se produit la capture de la cible et sa réaction avec la sonde. La réaction sonde-cible doit être rapide (équilibre atteint en quelques minutes) et à haut rendement. Quant au support, il doit être bas coût, facile à fonctionnaliser avec la sonde et compatible avec la transduction optique.

En 1992, Kuban *et al* proposent la détection de sulfure d'hydrogène en solution par formation de bleu de méthylène en faisant réagir le composé soufré avec une molécule sonde appelée DMPD (N,N-diméthylparaphénylènediamine) (produit (a) dans Schéma 1 ci-après) **[29].** Le produit formé i.e. le bleu de méthylène (MS), possède des propriétés optiques très favorables, avec une forte absorbance dans le visible. Deux bandes d'absorbance, à 668 nm et 745 nm, correspondent respectivement à la forme cationique MB⁺ (produit (b) dans Schéma 1) et protonée MBH²⁺ (produit (c) dans Schéma 1) (coefficient d'extinction molaire: 76000 L.mol⁻¹.cm⁻¹ à 668 nm et 64000 L.mol⁻¹.cm⁻¹ à 745 nm). En outre, la forme MB⁺ émet en fluorescence à 690 nm pour une excitation à 640 nm, ce qui autorise une détection en fluorescence **[30].** Enfin, la réaction en solution entre DMPD et H₂S est rapide (quelques minutes pour parvenir à l'équilibre), ce qui est essentiel pour concevoir un capteur.

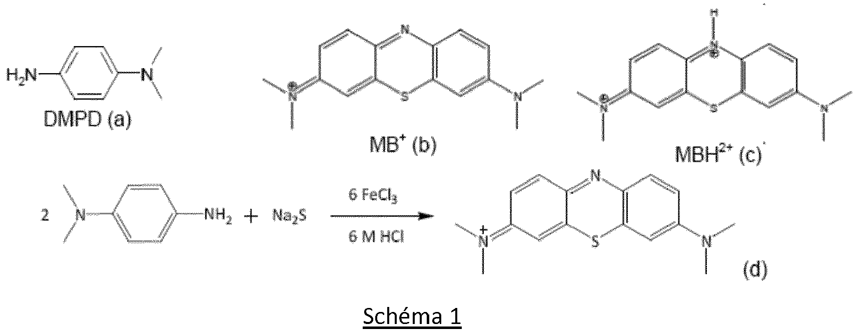

Dans l'exemple du Schéma 1, c'est le chlorure de fer FeCl₃ qui permet d'oxyder la DMPD pour la rendre réactive vis-à-vis du sulfure. Six moles d'oxydant sont nécessaires par mole de sulfure. Deux moles de sonde DMPD sont en outre nécessaires pour transformer une mole de sulfure en bleu de méthylène.

Au vu de l'intérêt pour le dosage du sulfure d'hydrogène à faibles concentrations et, de façon générale, de tout VSC volatil, il y a un réel besoin pour un capteur sélectif de ces composés, portable, présentant un coût faible, utilisable sans formation particulière, capable de fournir une réponse sensible, rapide et indépendante des conditions environnantes telles que les conditions hygrométriques, et ce, sans nécessiter de préparation des échantillons. De plus, la réponse de ce capteur doit être stable au cours du temps et ne pas présenter de variabilité de réponse en fonction de sa durée de conservation.

### EXPOSÉ DE L'INVENTION

La présente invention permet de résoudre les problèmes techniques précédemment listés et de répondre aux inconvénients des procédés et dispositifs de l'état de la technique.

En effet, par leurs travaux, les inventeurs ont mis en oeuvre un détecteur ou capteur chimique, portable, facilement manipulable, bas-coût, utilisable pour les composés soufrés en phase gazeuse permettant le piégeage, la détection et éventuellement la quantification en temps réel de ces composés par transduction optique directe. Plus particulièrement, le capteur selon la présente invention est constitué d'un matériau poreux transparent. Au sein des pores du capteur, se produit une réaction chimique entre l'analyte soufré à détecter (la molécule cible) et une molécule sonde conduisant à la formation d'un produit coloré. C'est l'accumulation de ce produit coloré dans les pores du capteur qui est détecté optiquement et qui constitue l'étape de transduction.

Les inventeurs connaissaient les détecteurs décrits dans la demande internationale WO 2011/058066 utiles notamment pour détecter l'indole et ses dérivés **[31].** Ils ont donc voulu modifier un tel capteur pour l'adapter à la détection et à la quantification des composés soufrés volatils. A cet effet, ils ont envisagé d'utiliser, comme molécule-sonde, la DMPD du fait des propriétés intéressantes de cette dernière **[29,30].** Toutefois, le capteur ainsi préparé présente des limites de détection aux VSC et notamment au sulfure d'hydrogène insuffisantes et une sensibilité à l'hygrométrie le rendant inexploitable (voir l'exemple 1 comparatif).

Les inventeurs ont donc dû identifier, parmi les différentes molécules-sondes ayant comme molécules cibles les VSC, celles qui permettent d'obtenir un capteur répondant à toutes les exigences liées à la détection et à la quantification des VSC. Les molécules-sondes ainsi identifiées correspondent à des disulfures aromatiques substitués tels que définis ci-après.

La présente invention repose sur deux principes :
- l'utilisation d'une matrice nanoporeuse d'oxyde en tant que support pour la transduction optique, un tel solide présentant de nombreux atouts pour ce mode de transduction à savoir une grande surface spécifique pour la capture de la cible gazeuse (plus de 500 m²/g en général), une grande transparence dans le visible et une faible fluorescence intrinsèque ;
- l'utilisation de disulfures aromatiques, fonctionnalisés par des groupes électroattracteurs, en tant que molécules sondes pour la réaction chimique spécifique qui permet la transduction, cette réaction entre molécule sonde et molécule cible devant générer un produit détectable optiquement et dont les propriétés optiques sont à la fois différentes de la sonde et de la cible.

La présente invention concerne donc un matériau de type oxyde poreux, et, en particulier, un matériau sol-gel poreux, comprenant, comme molécule-sonde, au moins un disulfure aromatique substitué par au moins un groupement électroattracteur, notamment pour son utilisation pour piéger et/ou détecter et éventuellement quantifier au moins un composé soufré volatil.

Par « matériau sol-gel », on entend un matériau obtenu par un procédé sol-gel consistant à utiliser comme précurseurs des alcoxydes métalliques, identiques ou différents, de formule M(OR)ₙ(R')ₘ dans laquelle M est un métal tel que le silicium (Si), le titane (Ti), le tungstène (W) et le molybdène (Mo), R et R' représentent un groupement alkyle et m et n des entiers avec m + n =4, 2 ≤ n ≤ 4 et 0 ≤ m ≤ 2. Avantageusement, les alcoxydes métalliques mis en oeuvre sont des alcoxydes de silice i.e. des composés de formule M(OR)ₙ(R')ₘ dans laquelle M est du silicium (Si) et R, R', m et n sont tels que précédemment définis.

Les matériaux sol-gel sont généralement préparés dans un solvant, qui est de préférence miscible à l'eau et évaporable progressivement et dans des conditions douces, dans lequel les précurseurs sont solubles.

Dans le cas des alcoxydes de silicium, on peut notamment citer, comme solvant, les alcools, tels que le méthanol, l'éthanol ; les éthers, tels que le diéthyléther et le tétrahydrofurane ; les solvants chlorés, tels que le chloroforme, CH₂Cl₂, C₂H₅Cl₂, d'autres solvants aprotiques comme l'acétonitrile, l'acétone, la méthyléthylcétone, ou le dioxane ou d'autres solvants protiques comme l'acide acétique, le formamide.

En présence d'eau, l'hydrolyse des groupements alcoxyde (-OR) intervient et ces derniers sont transformés en groupements silanol (Si-OH) qui se condensent en formant des groupements siloxane (Si-O-Si). De petites particules de taille généralement inférieure à 1 nanomètre sont alors formées. Elles s'agrègent et forment des amas lacunaires en suspension dans le liquide : c'est le sol. La polycondensation se poursuivant au cours du temps, la viscosité du sol augmente jusqu'à gélification : le sol devient un gel. Un matériau sol-gel solide est obtenu par séchage du gel, appelé xérogel. Au cours de cette étape, les solvants résiduels et interstitiels s'échappent du réseau polymérique formé et s'évaporent, ce qui provoque la contraction du matériau, notamment d'un facteur 2 sur chacune des dimensions par rapport au sol. On obtient donc un matériau final dont le volume est réduit par comparaison au volume occupé par le sol. Le sol-gel peut se présenter sous différentes formes, il peut ainsi par exemple être préparé dans un moule pour lui donner une forme spécifique ou bien réalisé sous forme de films notamment par « spin-coating » ou par « dip-coating » (films d'épaisseur inférieure à 1 µm) ou par « spray-coating » (films d'épaisseur supérieure à 1 µm).

La porosité des matériaux et notamment des matériaux sol-gel permet d'établir une nomenclature en fonction de la taille des pores, en effet selon les règles établies par l'International Union of Pure & Applied Chemistry (IUPAC) on peut distinguer, selon le diamètre moyen des pores dans un matériau, les micropores (moins de 20 Å), les mésopores (20-500 Å) et les macropores (plus de 500 Å).

Le matériau, tel que le matériau sol-gel, mis en oeuvre dans le cadre de la présente invention est poreux. Typiquement, le matériau, tel que le matériau sol-gel, obtenu après séchage présente à la fois des micropores et des mésopores : sa porosité est biomodale à savoir micro- et mésoporeuse. Avantageusement, ce matériau présente une distribution de taille de pores allant de 2 à 60 angströms, notamment de 3 à 50 angströms et, en particulier, de 4 à 40 angströms et une surface spécifique de 200 à 800 m².g⁻¹, notamment de 300 à 700 m².g⁻¹ et, en particulier, de 400 à 600 m².g⁻¹

Le matériau sol-gel mis en oeuvre dans le cadre de la présente invention est essentiellement préparé à partir de 1 à 4 type(s) de précurseurs alcoxysilanes et essentiellement obtenu à partir de l'hydrolyse de 1 à 4 type(s) de précurseurs alcoxysilanes. Le matériau sol-gel mis en oeuvre dans le cadre de la présente invention est donc essentiellement constitué d'unités issues de l'hydrolyse de 1 à 4 type(s) de précurseurs alcoxysilanes. Le matériau sol-gel peut être essentiellement préparé à partir d'au moins 2 type(s) de précurseurs alcoxysilanes différents.

Dans un mode de réalisation particulier, le matériau sol-gel mis en oeuvre dans le cadre de la présente invention est essentiellement préparé à partir :
- d'au moins un premier alcoxysilane constituant le « squelette » du matériau sol-gel, ce premier alcoxysilane étant de formule Si(OR¹)₄ ou R²Si(OR³)₃ dans lesquelles R¹, R² et R³, identiques ou différents, représentent un groupement alkyle de 1 à 6 atomes de carbone et
- d'au moins un second alcoxysilane de formule R⁴Si(OR⁵)₃ dans laquelle R⁴ représente un groupement alkyle de 1 à 6 atomes de carbone substitué et R⁵ représente un groupement alkyle de 1 à 6 atomes de carbone. Ce second type d'alcoxysilane permet de générer la porosité du matériau sol-gel du fait de l'encombrement stérique du groupement R⁴. Il est important de garder à l'esprit que ce groupement R⁴ ne participe pas à la polycondensation: on le retrouve donc en surface des pores dans l'oxyde final. Le choix de ce second type de précurseurs influe donc aussi sur les propriétés de surface du xérogel préparé et, en particulier, sur ses propriétés acido-basiques et hydrophile/hydrophobe.

Par conséquent, le matériau sol-gel mis en oeuvre dans le cadre de la présente invention est essentiellement constitué :
- d'unités d'au moins un premier alcoxysilane constituant le « squelette » du matériau sol-gel, ce premier alcoxysilane étant de formule Si(OR¹)₄ ou R²Si(OR³)₃ dans lesquelles R¹, R² et R³, identiques ou différents, représentent un groupement alkyle de 1 à 6 atomes de carbone et
- d'unités d'au moins un second alcoxysilane de formule R⁴Si(OR⁵)₃ dans laquelle R⁴ représente un groupement alkyle de 1 à 6 atomes de carbone substitué et R⁵ représente un groupement alkyle de 1 à 6 atomes de carbone.

Avantageusement, le premier type de précurseurs utilisés dans le cadre de la présente invention *i.e.* les précurseurs de formule Si(OR¹)₄ ou R²Si(OR³)₃ telles que précédemment définies est majoritaire en quantité. Ce type représente au moins 80% en moles par rapport au nombre total de moles de précurseurs. Ainsi, les précurseurs de formule R⁴Si(OR⁵)₃ tels que précédemment définis représentent au plus 20% en moles par rapport au nombre total de moles de précurseurs. En d'autres termes, le rapport molaire second(s) alcoxysilane(s)/ premier(s) alcoxysilane(s) est compris entre 0,005 et 0,25 ; notamment entre 0,01 et 0,10 ; et, en particulier, entre 0,02 et 0,05.

Pour les radicaux R¹, R², R³ et R⁵, on entend par groupement alkyle de 1 à 6 atomes de carbone, un groupement alkyle, linéaire ou ramifié, présentant de 1 à 6 atomes de carbone et notamment de 1 à 4 atomes de carbone.

Pour les radicaux R⁴, on entend par groupement alkyle de 1 à 6 atomes de carbone substitué, un groupement alkyle, linéaire ou ramifié, présentant de 1 à 6 atomes de carbone et notamment de 1 à 4 atomes de carbone, substitué. Ledit groupement R⁴ présente une ou plusieurs substitutions, identiques ou différentes, par un élément choisi dans le groupe constitué par un halogène tel que le fluor ou le chlore, un radical-NH₂, un radical -NHR⁸ avec R⁸ représentant un groupement alkyle de 1 à 6 atomes de carbone tel que précédemment défini, un radical -COOH, un radical -COOR⁹ avec R⁹ représentant un groupement alkyle de 1 à 6 atomes de carbone tel que précédemment défini et un radical -[O-C₂H₄]ₓ-OH avec x représentant un nombre entier compris entre 1 et 10 et notamment entre 1 et 5.

La présente invention concerne un matériau sol-gel particulier parmi ceux mis en oeuvre dans la présente invention. En effet, la présente invention concerne un matériau sol-gel comprenant, comme molécule-sonde, au moins un disulfure aromatique substitué par au moins un groupement électroattracteur et essentiellement constitué :
- d'unités d'au moins un premier alcoxysilane constituant le « squelette » du matériau sol-gel, ce premier alcoxysilane étant de formule Si(OR¹)₄ ou R²Si(OR³)₃ dans lesquelles R¹, R² et R³, identiques ou différents, représentent un groupement alkyle de 1 à 6 atomes de carbone et
- d'unités d'au moins un second alcoxysilane de formule R⁴Si(OR⁵)₃ dans laquelle R⁴ représente un groupement alkyle de 1 à 6 atomes de carbone substitué et R⁵ représente un groupement alkyle de 1 à 6 atomes de carbone,

ledit groupement R⁴ présentant une ou plusieurs substitutions, identiques ou différentes, par un élément choisi dans le groupe constitué par un halogène tel que le fluor ou le chlore, un radical -NH₂, un radical -NHR⁸ avec R⁸ représentant un groupement alkyle de 1 à 6 atomes de carbone tel que précédemment défini, un radical -COOH, un radical -COOR⁹ avec R⁹ représentant un groupement alkyle de 1 à 6 atomes de carbone tel que précédemment défini et un radical -[O-C₂H₄]ₓ-OH avec x représentant un nombre entier compris entre 1 et 10 et notamment entre 1 et 5.

A titre de premier alcoxysilane utilisable dans le cadre de la présente invention, on peut citer le tétraméthoxysilane (TMOS, Si(OCH₃)₄), le tétraéthoxysilane (TEOS, Si(OC₂H₅)₄), le tétrapropoxysilane (TPOS, Si(OC₃H₇)₄), le tétrabutoxysilane (TBOS, Si(OC₄H₉)₄), le méthyltriméthoxysilane (MTMOS, (CH₃)Si(OCH₃)₃), l'éthyltriméthoxysilane (ETMOS, (C₂H₅)Si(OCH₃)₃), le propyltriméthoxysilane (PTMOS, (C₃H₇)Si(OCH₃)₃), le méthyltriéthoxysilane (MTEOS, (CH₃)Si(OC₂H₅)₃), l'éthyltriéthoxysilane (ETEOS, (C₂H₅)Si(OC₂H₅)₃) et le propyltriéthoxysilane (PTEOS, (C₃H₇)Si(OC₂H₅)₃) et leurs mélanges. Avantageusement, le premier alcoxysilane mis en oeuvre dans le cadre de la présente invention est le TMOS.

Dans le cadre de la présente invention, le second précurseur alcoxysilane permet de modifier et notamment d'agrandir la taille des pores du matériau sol-gel par l'utilisation de différents groupements de substitution. De même, le pH de surface du matériau peut être ajusté à l'aide du ratio molaire entre le ou les premier(s) alcoxysilane(s) et le ou les second(s) alcoxysilane(s). A titre de second alcoxysilane utilisable dans le cadre de la présente invention, on peut citer le 3-aminopropyltriéthoxysilane (APTES, Si(C₃H₆NH₂)(OC₂H₅)₃), le 3-aminobutyltriéthoxysilane (ABTES, Si(C₄H₈NH₂)(OC₂H₅)₃), le 3-aminopropyltriméthoxysilane (APTMS, Si(C₃H₆NH₂)(OCH₃)₃), le (3-(méthylamino)propyl)triméthoxysilane (Si(C₃H₆NHCH₃)(OCH₃)₃), le 3-carboxypropyltriéthoxysilane (Si(C₃H₆CO₂H)(OC₂H₅)₃), le 3-carboxypropyltriméthoxysilane (Si(C₃H₆CO₂H)(OCH₃)₃), le 1,2-bis(triéthoxysilyl)éthane ((OC₂H₅)₃Si-CH₂-CH₂-Si(OC₂H₅)₃), le 1,2-bis(triméthoxysilyl)éthane ((OCH₃)₃Si-CH₂-CH₂-Si(OCH₃)₃), le (3,3,3-trichloropropyl) triéthoxysilane (Si(C₂H₅CCl₃)(OC₂H₅)₃) et le 3,3,3-trifluoropropyl-triméthoxysilane (Si(C₂H₅CF₃)(OCH₃)₃) et leurs mélanges. Avantageusement, le second alcoxysilane mis en oeuvre dans le cadre de la présente invention est l'APTES ou l'ABTES.

Ainsi, un matériau sol-gel particulier dans le cadre de la présente invention est préparé essentiellement à partir de APTES et de TMOS ou d'ABTES et de TMOS dans un rapport molaire compris entre 0,005 et 0,25 ; notamment entre 0,01 et 0,10 ; et, en particulier, entre 0,02 et 0,05. Plus particulièrement, le rapport molaire (APTES ou ABTES)/TMOS est de 0,03. Ainsi, le matériau sol-gel selon l'invention comprend des unités de TMOS et d'APTES ou ABTES dans de telles proportions.

L'homme du métier pourra également mettre en oeuvre la présente invention en utilisant, pour préparer le matériau de type oxyde poreux et notamment le matériau sol-gel, les alcoxysilanes tels que définis dans les variantes V2 et V3 décrites dans la demande internationale WO 2011/058066 **[31].**

La molécule-sonde mise en oeuvre dans le cadre de la présente invention est un disulfure aromatique substitué par au moins un groupement électroattracteur. En fait, le matériau de type oxyde poreux et notamment le matériau sol-gel poreux objet de la présente invention présente une pluralité de disulfures aromatiques substitués par au moins un groupement électroattracteur, identiques ou différents. Ces molécules-sondes peuvent être adsorbées à la surface des pores du matériau sol-gel et/ou liées à cette surface par des liaisons non-covalentes (liaisons hydrogène ou liaisons ioniques) et/ou par des liaisons covalentes. Généralement les molécules-sondes sont réparties dans l'ensemble du volume du matériau.

Par « disulfure aromatique », on entend, dans le cadre de la présente invention, un composé de formule (I) suivante :

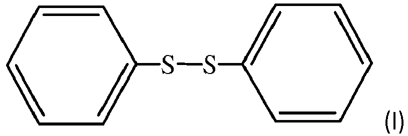

Par « disulfure aromatique substitué », on entend, dans le cadre de la présente invention, un composé de formule (I) telle que précédemment définie dans lequel l'un et/ou l'autre des phényles est substitué par au moins un groupement électroattracteur.

Dans un 1^{er} mode de réalisation, le disulfure aromatique substitué mis en oeuvre dans le cadre de la présente invention est un composé aromatique de formule (I) dans lequel chaque phényle est substitué par un groupement électroattracteur identique ou différent. Typiquement, un tel disulfure aromatique substitué est un composé répondant à l'une quelconque des formules suivantes : 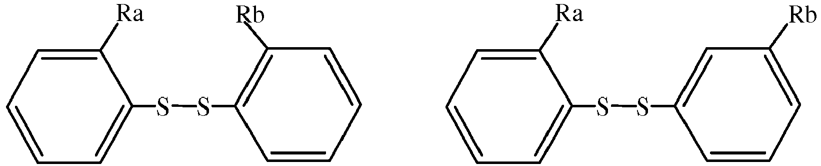 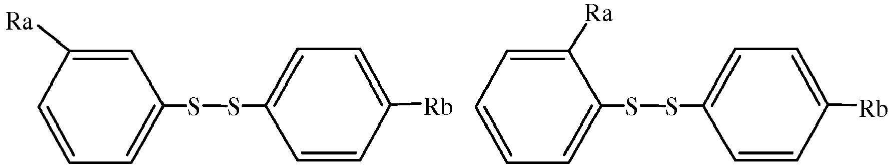 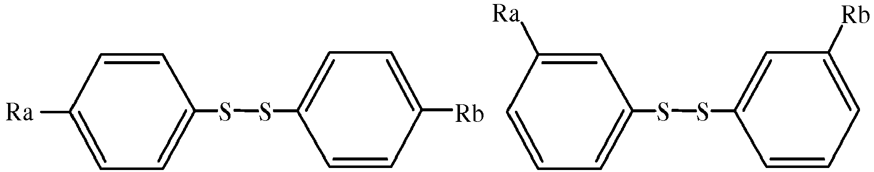 dans lesquelles Ra et Rb représentent des groupements électroattracteurs identiques ou différents.

Dans un 2^{nd} mode de réalisation, le disulfure aromatique substitué mis en oeuvre dans le cadre de la présente invention est un composé aromatique de formule (I) dans lequel chaque phényle est substitué par deux groupements électroattracteurs, identiques ou différents. Dans ce mode de réalisation, les quatre groupements électroattracteurs du disulfure aromatique substitué peuvent être tous différents. En variante, deux des quatre groupements électroattracteurs du disulfure aromatique substitué peuvent être identiques, les deux autres groupements électroattracteurs pouvant être identiques ou différents. Typiquement, un tel disulfure aromatique substitué est un composé répondant à l'une quelconque des formules suivantes : 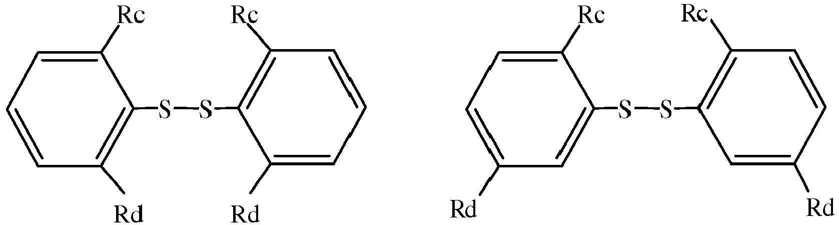 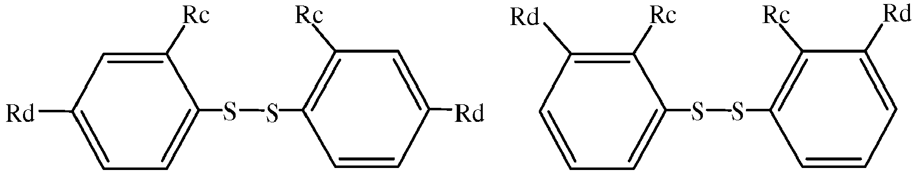 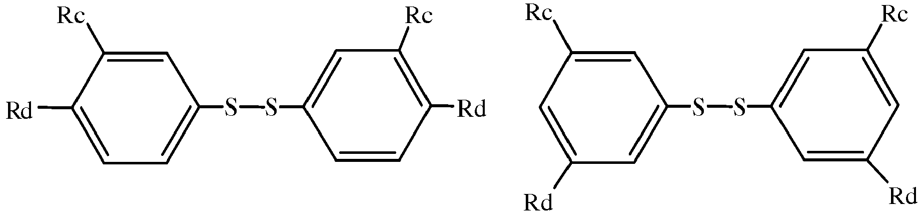 dans lesquelles Rc et Rd représentent des groupements électroattracteurs identiques ou différents.

Par « groupement électroattracteur », on entend un groupement attracteur d'électrons ou électrophile choisi parmi -F, -CI, -Br, -C(=O)-R¹⁰, -O-C(=O)-R¹⁰, -NO₂, -CN, -NR¹¹₃⁺, dans lesquels
- R¹⁰ est un atome d'hydrogène, un groupe OH, un groupe alkyle éventuellement substitué, un groupe alcoxy éventuellement substitué ou un groupe aryle éventuellement substitué et
- R¹¹ est un atome d'hydrogène, un groupe alkyle éventuellement substitué ou un groupe aryle éventuellement substitué.

Dans le cadre des groupements électroattracteurs, on entend par « groupe alkyle » un groupe alkyle linéaire ou ramifié, présentant de 1 à 6 atomes de carbone et notamment de 1 à 4 atomes de carbone.

Dans le cadre des groupements électroattracteurs, on entend par « groupe alcoxy » un atome d'oxygène substitué par un alkyle tel que précédemment défini.

Dans le cadre des groupements électroattracteurs, on entend par « groupe aryle » un groupe aromatique mono- ou polycyclique, éventuellement substitué, ayant de 4 à 10 atomes de carbone et, notamment, de 6 à 8 atomes de carbone.

Dans le cadre des groupements électroattracteurs, on entend par « éventuellement substitué » un radical substitué par un ou plusieurs groupes choisi(s) parmi : un groupe alkyle tel que précédemment défini, un groupe alcoxy tel que précédemment défini, un fluor, un chlore, un brome, un iode, un hydroxy, un cyano, un trifluorométhyle ou un nitro.

Un exemple particulier de disulfure aromatique substitué utilisable dans le cadre de la présente invention est l'acide 5,5'-dithiobis(2-nitrobenzoïque), appelé DTNB ou « réactif d'Ellman » de formule :

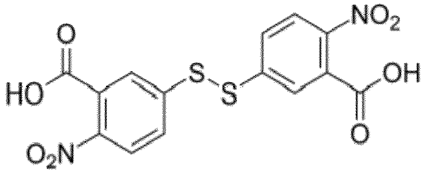

Le pourcentage pondéral de molécules-sondes est avantageusement de 0,01 à 30%, en particulier de 0,1 à 20% et tout particulièrement de 1 à 10% rapporté au poids total du matériau sol-gel poreux.

Le matériau sol-gel poreux peut en outre contenir des composés structurants tels que des polymères organiques, comme les ionomères et notamment les polymères organiques fluorés dérivés de l'éthylène à fonction acide, e.g. le NAFION^{®}, et également des tensioactifs généralement neutres.

Le matériau sol-gel mis en oeuvre dans le cadre de la présente invention doit présenter un pH intrinsèque, également désigné pH de surface, proche du pH optimal de la réaction de transduction entre la molécule-sonde et la cible. L'homme du métier saura déterminer, sans effort inventif, le pH le mieux adapté en fonction de la molécule-sonde mise en oeuvre et de la cible à détecter. De plus, du côté du matériau sol-gel, ce sont les propriétés acido-basiques du précurseur alcoxysilane porogène ou d'un autre précurseur additionnel qui permettent d'imposer un pH intrinsèque.

Ce pH peut être déterminé par piégeage dans les pores d'un gaz indicateur de pH. Il s'agit d'une molécule volatile, colorée, pour laquelle les deux formes acide et basique présentent des spectres d'absorbance sensiblement différents. Enfin, le pKa de cet indicateur de pH doit être proche du pH de surface à mesurer, avantageusement entre (pH de surface -1) et (pH de surface +1), en particulier entre (pH de surface -0,5) et (pH de surface +0,5).

Dans le cas de la présente invention, notamment lorsque la molécule-sonde est le DTNB, ce pH optimal est avantageusement neutre, c'est-à-dire compris entre 6 et 8, en particulier entre 7 et 8, et tout particulièrement de 7,4. Avec 3% de précurseur APTES (par rapport au nombre de moles total de précurseurs) et 97% de TMOS, on peut obtenir un pH intrinsèque du xérogel de 7,00. Dans cette gamme de pH, l'indicateur coloré utilisable est avantageusement un isomère du nitrophénol, et en particulier le 4-nitrophénol ou le 2-nitrophénol.

La présente invention concerne également un procédé de préparation d'un matériau de type oxyde poreux selon l'invention et, en particulier, un matériau sol-gel poreux, comprenant au moins une molécule-sonde telle que précédemment définie.

Différents procédés de préparation sont envisageables dans le cadre de la présente invention. La (ou les) molécule(s)-sonde peu(ven)t être incorporée(s) au matériau sol-gel, après la préparation de ce dernier par un procédé sol-gel classique.

Cette incorporation peut se faire par diffusion en voie gazeuse en mettant en contact la molécule-sonde sous forme gazeuse directement avec le matériau (sous vide partiel ou par circulation du gaz) ou en voie liquide en mettant le matériau directement dans une solution (aqueuse ou solvant) contenant la molécule-sonde dissoute ou diluée. A cet effet, la molécule-sonde peut être obtenue à l'état gazeux par évaporation d'une solution de sonde ou par sublimation de sonde solide. On a alors une simple adsorption de la molécule-sonde à la surface du matériau sol-gel.

Cette incorporation peut également se faire par fonctionnalisation ou post-dopage consistant à créer une liaison covalente entre le matériau et la molécule-sonde. Pour cela, il est avantageux de fonctionnaliser la surface du matériau pour améliorer sa compatibilité avec la molécule-sonde ou fonctionnaliser cette dernière.

On peut également introduire une liaison covalente entre la surface du xérogel et la molécule-sonde. Pour ce faire, est utilisé un alcoxysilane de formule R⁸Si(OR⁹)₃ dans lesquelles R⁹ représente un groupement alkyle de 1 à 6 atomes de carbone et R⁸ est la molécule sonde liée de manière covalente au silicium du précurseur. Ce troisième type de précurseur alcoxyde est alors tout simplement ajouté aux deux autres précédemment cités, lors de la préparation du sol.

En variante préférée, le procédé de préparation selon l'invention consiste à ajouter la molécule-sonde directement lors de la préparation du sol (technique « one-pot »), ce qui entraîne l'encapsulation directe de la molécule-sonde dans le réseau de silice et permet d'obtenir une meilleure répartition des molécules-sondes dans le matériau sol-gel selon la présente invention. La dissolution des molécules-sondes peut se faire au choix dans le solvant ou dans l'eau servant à la préparation du sol. Le choix préférentiel sera de dissoudre la molécule-sonde dans le milieu dans lequel elle est la plus soluble ou la mieux miscible.

Le procédé de préparation d'un matériau selon la présente invention comprend les étapes successives suivantes consistant à :
a) mélanger au moins un premier alcoxysilane de formule Si(OR¹)₄ ou R²Si(OR³)₃ tel que précédemment défini avec un solvant et au moins une molécule-sonde telle que précédemment définie ;
b) ajouter au mélange de l'étape (a) au moins un second alcoxysilane de formule R⁴Si(OR⁵)₃ tel que précédemment défini ;
c) ajouter au mélange de l'étape (b) de l'eau ;
d) mettre en forme le sol obtenu suite à l'étape (c) pour obtenir le matériau de type oxyde poreux et notamment le matériau sol-gel poreux comprenant au moins une molécule-sonde selon l'invention.

Les molécules-sondes mises en oeuvre dans la présente invention peuvent être dissoutes lors du mélange de l'étape (a) ou préalablement à cette étape et notamment dans le solvant mis en oeuvre lors de cette dernière. Avantageusement, les molécules-sondes sont dissoutes dans le solvant en plaçant le mélange molécules-sondes et solvant dans un bain à ultrasons pendant une durée de 1 à 30 min, notamment de 5 à 20 min et, en particulier, pendant environ 10 min (10 min ± 2 min) de façon à obtenir un mélange homogène. La concentration en molécules-sondes dans le solvant peut varier en fonction des besoins du détecteur et aller jusqu'à la saturation dans le solvant.

Le solvant mis en oeuvre lors de l'étape (a) est destiné, d'une part, à dissoudre la (ou les) molécule(s)-sonde et, d'autre part, à augmenter la miscibilité entre les précurseurs et l'eau. Ce solvant est avantageusement choisi dans le groupe constitué par un alcool tel que le méthanol, l'éthanol, le propanol ou le butanol, l'acétone, le formamide, la méthyléthylcétone, le chloroforme, le dichlorométhane, l'acide acétique et leurs mélanges. Avantageusement, ce solvant est du méthanol et/ou de l'éthanol.

L'étape (a) du procédé de l'invention consiste, plus particulièrement, à mélanger le (ou les) premier(s) alcoxysilane(s), le solvant et la (ou les) molécule(s)-sonde(s) à l'aide d'un agitateur, d'un agitateur magnétique, d'un barreau magnétique, d'un bain à ultrasons ou d'un homogénéisateur, de façon à obtenir un mélange homogène. Le mélange de l'étape (a) peut être effectué à une température comprise entre -45 et +30°C, notamment entre -35 et +10°C, en particulier entre -25 et 0°C et, plus particulièrement, à une température de l'ordre de -20°C (i.e. -20°C ± 5°C) pendant une durée de 30 sec à 15 min, notamment de 60 sec à 10 min, en particulier, de 90 sec à 5 min, et, plus particulièrement, pendant environ 2 min (i.e. 2 min ± 30 sec).

Avantageusement, lors de l'étape (b) du procédé selon l'invention, la quantité adéquate du (ou des) second(s) alcoxysilane(s) est ajoutée au mélange de l'étape (a) puis le mélange obtenu est agité à l'aide d'un agitateur, d'un agitateur magnétique, d'un barreau magnétique, d'un bain à ultrasons ou d'un homogénéisateur, de façon à obtenir un mélange homogène. L'étape (b) et notamment le mélange de l'étape (b) peuvent être effectués à une température comprise entre -45 et +30°C, notamment entre -35 et +10°C, en particulier entre -25 et 0°C et, plus particulièrement, à une température de l'ordre de -20°C (i.e. -20°C ± 5°C) et ce, pendant une durée de 30 sec à 15 min, notamment de 60 sec à 10 min, en particulier, de 90 sec à 5 min, et, plus particulièrement, pendant environ 2 min (i.e. 2 min ± 30 sec).

L'étape (c) du procédé selon l'invention consiste à ajouter, au mélange de l'étape (b), tout d'abord, de l'eau, à agiter le mélange ainsi obtenu puis à ajouter lentement, à une vitesse comprise entre 6 et 10 mL par minute, un acide tel qu'un acide fort. L'agitation lors de l'étape (c) est effectuée à l'aide d'un agitateur, d'un agitateur magnétique, d'un barreau magnétique, d'un bain à ultrasons ou d'un homogénéisateur, et dure de 5 sec à 5 min, notamment de 10 sec à 1 min, en particulier, de 20 sec à 45 sec, et, plus particulièrement, pendant environ 30 sec (i.e. 30 sec ± 5 sec). L'étape (c) peut être effectuée à une température comprise entre -45 et +30°C, notamment entre -35 et +10°C, en particulier entre -25 et 0°C et, plus particulièrement, à une température de l'ordre de-20°C (i.e. -20°C ± 5°C). L'eau ajoutée lors de l'étape (c) est avantageusement ultrapure, telle que de l'eau distillée ou de l'eau déionisée.

Le (ou les) second(s) alcoxysilane(s) modifient les conditions initiales de pH du sol et catalysent la gélification. Aussi, il faut procéder à la mise en forme, selon l'étape (d) du procédé, le plus rapidement possible en maintenant le sol le plus possible à une température comprise entre -45 et +30°C, notamment entre -35 et +10°C, en particulier entre -25 et 0°C et, plus particulièrement, à une température de l'ordre de -20°C (i.e. -20°C ± 5°C). Avantageusement, les étapes (a), (b), (c) et (d) du procédé selon l'invention sont effectuées à la même température. La mise en forme lors de l'étape (d) du procédé consiste à déposer une quantité adéquate du sol obtenu à l'étape (c) dans un moule pour obtenir les blocs de sol-gel attendu. Ce moule peut présenter une forme et une taille quelconques. Il est avantageusement en polystyrène ou en polypropylène. A titre d'exemple, le moule peut être un puits d'une plaque multipuits, ou une cuve pour spectrophotomètre.

Suite à l'étape (d) du procédé selon l'invention et une fois que le sol est gélifié, on peut procéder en outre au séchage des blocs du sol-gel obtenu de façon à faire évaporer les solvants et acides résiduels. Le séchage des matériaux sol-gel se déroule avantageusement à une température contrôlée et sous atmosphère de gaz inerte sec (azote, argon, air, etc.). Le séchage des blocs du sol-gel peut notamment être réalisé en disposant un couvercle perméable aux gaz et plus particulièrement un film poreux à la surface des moules puis en plaçant ces moules à température ambiante (i.e. 21°C ± 4°C) ou dans une enceinte thermostatée à une température comprise entre 10 et 60°C et notamment entre 20 et 40°C. Le séchage peut être effectué sous une hotte aspirante. L'atmosphère de séchage peut aussi être un gaz inerte sec et pur (azote qualité U - pureté < 99,5%, air industriel qualité FID, etc...). La durée pour un séchage complet sera variable entre 2 h et 10 jours et notamment entre 6 h et 5 jours.

Une fois le séchage complet intervenu, les matériaux sol-gel selon l'invention, également appelés dans la présente « monolithes » ou « xérogels », se démoulent facilement et peuvent être conservés dans des récipients fermés tels que des tubes en verre ou en polytetrafluoroéthylène (ex. : TEFLON^{®}) fermés hermétiquement. Pour une conservation plus longue (> 6 mois), les matériaux sol-gel secs peuvent être conservés au réfrigérateur à +4°C ± 4°C. Pour une conservation plus longue encore (> 12 mois), les matériaux sol-gel peuvent être démoulés, avant séchage complet, notamment quand leur diamètre a légèrement rétréci, et conservés ainsi dans un récipient scellé tel qu'un tube en verre scellé. Dans ce cas, avant d'utiliser le matériau sol-gel de l'invention en tant que détecteur, l'utilisateur devra procéder au séchage complet de ce matériau en le plaçant quelques heures, notamment entre 1 et 10 heures, en particulier, entre 2 et 5 heures et typiquement 3 heures, à l'air libre ou dans une atmosphère de gaz inerte sec et pur (azote de qualité U, air industriel pour les chromotographies en phase gazeuse etc.). Les matériaux sol-gel selon l'invention sous forme de monolithes ou xérogels présentent avantageusement une épaisseur supérieure ou égale à 5 µm, notamment supérieure ou égale à 50 µm, en particulier, supérieure ou égale à 200 µm et, tout particulièrement, comprise entre 1 et 2 mm. Les matériaux sol-gel selon l'invention doivent présenter une épaisseur suffisamment importante pour permettre des mesures d'absorbance.

La présente invention concerne également l'utilisation d'un matériau de type oxyde poreux et, en particulier, d'un matériau sol-gel poreux comprenant au moins une molécule-sonde selon l'invention ou susceptible d'être préparé par un procédé de préparation selon la présente invention pour piéger et/ou détecter et éventuellement quantifier au moins un composé soufré volatil.

Par « composé soufré volatil », on entend un composé chimique, organique ou inorganique, comprenant au moins un atome de soufre, ce composé, solide ou liquide, présentant la propriété de s'évaporer facilement i.e. présentant une température d'ébullition inférieure ou égale à 50°C et notamment inférieure ou égale à 40°C. Plus particulièrement, ces composés sont à l'état de gaz ou de vapeur dans les conditions normales de température et de pression et présentent notamment une pression de vapeur saturante supérieure à 10 Pa à 20°C et 1 atm (101325 Pa).

Avantageusement, le composé soufré volatil susceptible d'être piégé et/ou détecté et éventuellement quantifié dans le cadre de la présente invention appartient aux familles des thiols, des sulfures, des disulfures et des trisulfures volatils.

Par « thiol », on entend un composé de formule R¹²-SH avec R¹² représentant un atome d'hydrogène, un groupe (hétéro)alkyle éventuellement substitué ou un groupe (hétéro)aryle éventuellement substitué.

Dans le cadre des thiols, on entend par « groupe alkyle » un groupe alkyle tel que précédemment défini i.e. un groupe alkyle linéaire ou ramifié, présentant de 1 à 6 atomes de carbone et notamment de 1 à 4 atomes de carbone.

Dans le cadre des thiols, on entend par « groupe hétéroalkyle » un groupe alkyle tel que précédemment défini, substitué par un groupement comprenant au moins un hétéroatome et/ou interrompu par au moins un hétéroatome, ledit hétéroatome étant, par exemple, choisi parmi un atome d'oxygène, un atome d'azote, un atome de phosphore, un atome d'iode, un atome de chlore ou un atome de brome.

Dans le cadre des thiols, on entend par « groupe aryle » un groupe aryle tel que précédemment défini i.e. un groupe aromatique mono- ou polycyclique, éventuellement substitué, ayant de 4 à 10 atomes de carbone et, notamment, de 6 à 8 atomes de carbone.

Dans le cadre des thiols, on entend par « groupe hétéroaryle » un groupe aryle tel que précédemment défini, substitué par un groupement comprenant au moins un hétéroatome et/ou interrompu par au moins un hétéroatome, ledit hétéroatome étant, par exemple, choisi parmi un atome d'oxygène, un atome d'azote, un atome de phosphore, un atome d'iode, un atome de chlore ou un atome de brome.

Dans le cadre des thiols, on entend par «substitué » un radical substitué par un ou plusieurs groupes choisi(s) parmi : un groupe alkyle tel que précédemment défini, un groupe alcoxy tel que précédemment défini, un groupe carboxy, un fluor, un chlore, un brome, un iode, un hydroxy, un cyano, un trifluorométhyle ou un nitro.

Dans le cadre des thiols, on entend par « groupe carboxy » un groupe de formule -COOR¹³ dans laquelle R¹³ représente un atome d'hydrogène ou un groupe alkyle tel que précédemment défini.

Par « sulfure », on entend un composé de formule R¹³-S-R¹⁴ avec R¹³ et R¹⁴, identique ou différent, représentant un atome d'hydrogène, un groupe (hétéro)alkyle éventuellement substitué tel que précédemment défini ou un groupe (hétéro)aryle éventuellement substitué tel que précédemment défini.

Par « disulfure », on entend un composé de formule R¹⁵-SS-R¹⁶ avec R¹⁵ et R¹⁶, identique ou différent, représentant un atome d'hydrogène, un groupe (hétéro)alkyle éventuellement substitué tel que précédemment défini ou un groupe (hétéro)aryle éventuellement substitué tel que précédemment défini.

Par « trisulfure », on entend un composé de formule R¹⁷-SSS-R¹⁸ avec R¹⁷ et R¹⁸, identique ou différent, représentant un atome d'hydrogène, un groupe (hétéro)alkyle éventuellement substitué tel que précédemment défini ou un groupe (hétéro)aryle éventuellement substitué tel que précédemment défini.

Plus particulièrement, le composé soufré volatil susceptible d'être piégé et/ou détecté et éventuellement quantifié dans le cadre de la présente invention est choisi dans le groupe constitué par le sulfure d'hydrogène (H₂S), le méthanethiol ((CH₃)SH), l'éthanethiol ((C₂H₅)SH), le sulfure de diméthyle ((CH₃)₂S), le sulfure de diéthyle ((C₂H₅)₂S), le disulfure de diméthyle ((CH₃)SS(CH₃)), le disulfure de diéthyle ((C₂H₅)SS(C₂H₅)), le trisulfure de diméthyle ((CH₃)SSS(CH₃)), le 2-méthyl-3-furanthiol (C₅H₆OS), le 3-(mercapto)hexylacetate (C₃H₇CH(SH)C₂H₄OC(O)CH₃), le 3-mercaptohexan-1-ol (C₃H₇CH(SH)C₂H₄OH), l'acide 3-methylthio-proprionique (CH₃SC₂H₄COOH) et un de leurs mélanges.

Comme précédemment exposé dans la partie « Etat de la technique antérieure », les composés soufrés volatils interviennent ou sont présents dans de nombreux domaines. Aussi, la présente invention concerne l'utilisation d'un matériau sol-gel comprenant au moins une molécule-sonde selon l'invention ou susceptible d'être préparé par un procédé de préparation selon la présente invention pour piéger et/ou détecter et éventuellement quantifier au moins un composé soufré volatil tel que précédemment défini dans le domaine de la biochimie, de la microbiologie, dans le domaine du diagnostic médical, dans le domaine du contrôle qualité, dans le domaine de l'agro-alimentaire, dans le domaine du contrôle vétérinaire, environnemental et/ou sanitaire et/ou dans le domaine de la parfumerie, des cosmétiques et/ou des arômes.

Plus particulièrement, la présente invention concerne un procédé pour piéger et/ou détecter et éventuellement quantifier au moins un composé soufré volatil tel que précédemment défini comprenant les étapes consistant à :
i) mettre en contact un mélange gazeux susceptible de contenir au moins un composé soufré volatil tel que précédemment défini avec un matériau sol-gel poreux comprenant au moins une molécule-sonde tel que précédemment défini ;
ii) piéger et/ou détecter et éventuellement quantifier le (ou les) composé(s) soufré(s) volatil(s) éventuellement présent(s).

Le mélange gazeux mis en oeuvre dans le cadre de la présente invention est avantageusement un prélèvement aérien extérieur, un prélèvement provenant d'une culture de micro-organismes, un prélèvement provenant d'industries du domaine chimique, agro-alimentaire, pharmaceutique ou cosmétique ou un prélèvement d'haleine humaine ou animale.

Différentes variantes peuvent être utilisées pour la mise en contact lors de l'étape (i) du procédé selon l'invention. Ainsi, on peut mettre ledit matériau en présence du mélange gazeux (expositions statiques) ou faire circuler le mélange gazeux sur ledit matériau (exposition dynamique).

La détection lors de l'étape (ii) selon l'invention peut être réalisée notamment par mesures optiques. Avantageusement, cette détection est effectuée en mesurant la variation d'absorbance, de fluorescence ou de luminescence du matériau selon l'invention lorsqu'il est exposé à un mélange gazeux contenant le (ou les) composé(s) soufré(s) volatil(s) tel(s) que précédemment défini(s). On choisit de préférence la longueur d'onde pour laquelle l'absorbance, la fluorescence ou la luminescence de la molécule-sonde, ou du produit formé par l'interaction ou la réaction entre la molécule-sonde et un composé chimique détecté est la plus élevée.

La mesure obtenue comparée à la mesure obtenue à partir de mélanges calibrés de composés soufrés volatils connus donne directement une information sur la quantité et/ou la nature du (ou des) composé(s) soufré(s) volatil(s) dans le mélange d'exposition.

La présente invention concerne enfin un système de piégeage et/ou de détection comprenant au moins un matériau de type oxyde poreux et, en particulier, un matériau sol-gel poreux comprenant au moins une molécule-sonde selon l'invention. Le système de piégeage et/ou de détection selon l'invention comprend en outre au moins un élément choisi dans le groupe constitué par un système millifluidique pour l'écoulement gazeux; une chambre d'exposition éventuellement étanche, munie de fenêtres optiques et éventuellement d'ouvertures pour le système millifluidique dans laquelle le matériau selon l'invention est placé et mis en contact avec le mélange gazeux à analyser; un système de maintien du matériau selon l'invention ; un dispositif d'irradiation tel que lampe, LED, diode laser, etc.) ; éventuellement un système optique de collimation et de focalisation de la lumière d'analyse ; éventuellement des moyens aptes à véhiculer la lumière tels que des fibres optiques; et un détecteur tel que spectromètre, barrette de diode, diode électroluminescente, photodiode, filtre interférentiel, photomultiplicateur avantageusement refroidi, etc.

Comme le procédé de piégeage, de détection et/ou de quantification selon l'invention met en oeuvre un mélange gazeux, on peut envisager une exposition statique au cours de laquelle le matériau selon l'invention est simplement mis en contact passif avec l'atmosphère contenant le (ou les) composé(s) soufré(s) volatil(s) visé(s).

L'exposition statique peut être réalisée soit en vase clos dans un volume prédéterminé, soit en atmosphère ouverte. Le vase clos peut correspondre à un prélèvement ponctuel pendant lequel la concentration en composé(s) soufré(s) volatil(s) n'aura que très peu évolué. Ce type d'exposition implique donc une étape préalable à l'étape (i) du procédé selon l'invention consistant en un prélèvement. L'étape (i) du procédé selon l'invention peut être immédiate ou reportée dans le temps par rapport au prélèvement (cas de l'analyse en laboratoire). L'exposition statique en vase clos peut aussi correspondre à l'exposition du matériau poreux selon l'invention dans un volume fixe dans lequel la concentration en composé(s) soufré(s) volatil(s) peut augmenter au cours du temps (cas d'une culture de bactéries produisant un composé soufré volatil). L'exposition statique en atmosphère ouverte est représentative de l'exposition réelle à laquelle un individu ou une chose est soumis.

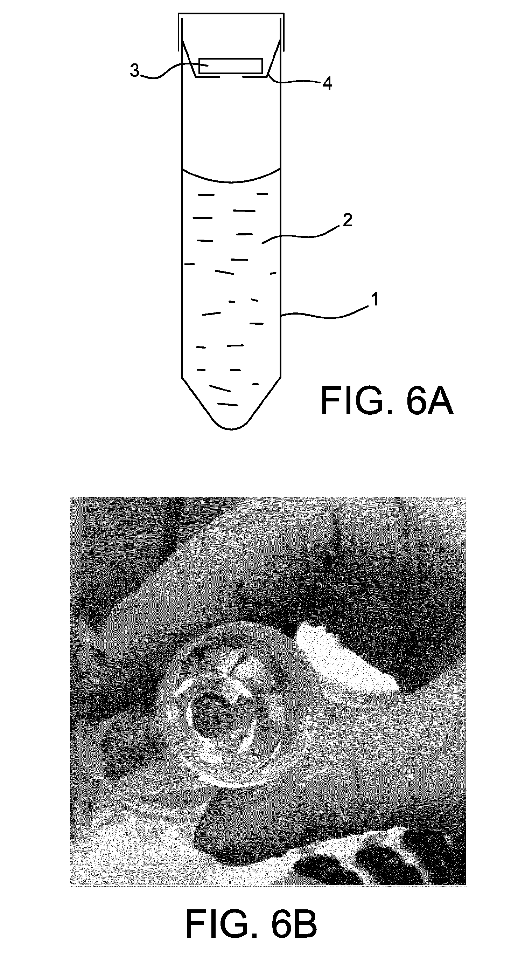

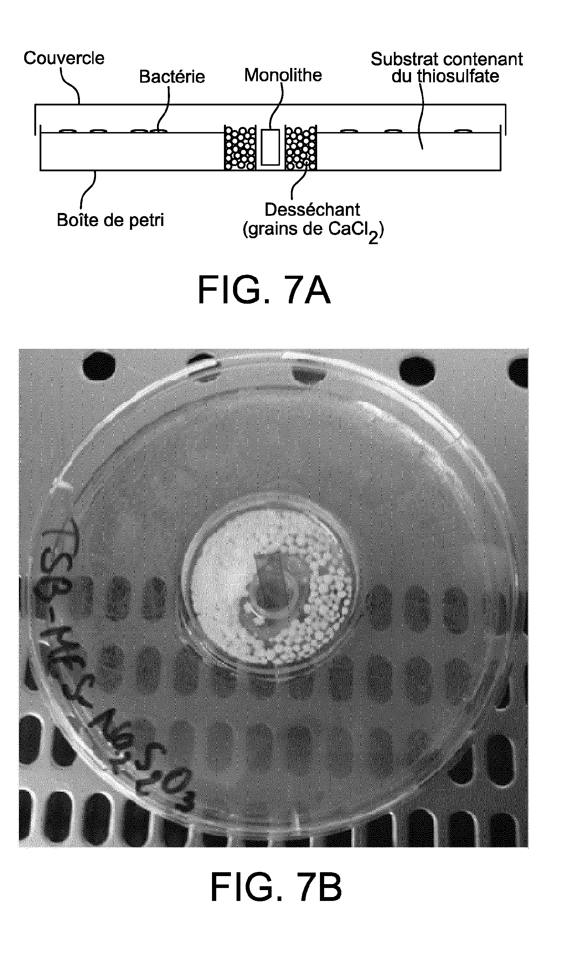

Dans ces 2 cas d'exposition statique, le système de détection nécessite, en outre, un moyen de maintien du matériau sol-gel identique à celui utilisé pour déterminer la courbe ou la gamme colorimétrique d'étalonnage. Ce système de piégeage et/ou de détection appliqué aux cultures bactériennes en milieu liquide ou en milieu gélosé est présenté aux Figures 6A et 7A.

Ce mode de réalisation permet de remplacer avantageusement les méthodes normalisées de détection de *Salmonella* en matrice alimentaire précédemment exposées. En effet, un matériau de type oxyde poreux et, en particulier, un matériau sol-gel selon la présente invention employé dans la première étape d'enrichissement non sélectif en sac *stomacher* permet de mettre de côté les sacs où il y a émission de sulfure d'hydrogène (stratification des *stomachers).* Comme la production de ce gaz est une condition nécessaire mais non suffisante à la détection de *Salmonella,* les autres cultures en stomacher ne peuvent pas contenir ce type de bactéries et il n'est pas nécessaire de poursuivre les investigations sur ces dernières. Cela représente un gain de temps considérable, seule la petite fraction de sacs « H₂S positifs » donnant lieu à l'enrichissement sélectif et l'isolement.

La mesure de l'absorbance du complexe coloré mettant en oeuvre un tel système de piégeage et/ou de détection peut être réalisée sur une large gamme de longueurs d'onde, soit limitée à une ou deux longueurs d'onde fixées respectivement au maximum et au minimum d'absorption d'une ou de la bande d'absorption du complexe dans le matériau poreux selon l'invention. La mesure peut enfin être une mesure de nuance colorimétrique ou une appréciation visuelle de cette nuance.

En variante, on peut envisager une exposition dynamique qui consiste à faire circuler à un débit fixé, l'atmosphère contenant le (ou les) composé(s) soufré(s) volatil(s) visé(s) directement sur le matériau poreux selon l'invention. Dans ce cas, il s'agit de déterminer une concentration précise dans des conditions opératoires identiques à celles utilisées pour la détermination de la courbe de calibration.

Dans cette variante, le système de piégeage et/ou de détection selon l'invention comprend avantageusement :
- un système millifluidique pour l'écoulement gazeux permettant avantageusement un débit de 0,01 à 1,1 L.min⁻¹;
- une chambre d'exposition munie de fenêtres optiques et d'ouvertures pour le système millifluidique (entrée et sortie de gaz) ;
- un système optique de collimation et focalisation de la lumière d'analyse ;
- des moyens aptes à véhiculer la lumière tels que des fibres optiques ;
- une (micro)pompe adaptée au débit désiré ;
- un détecteur tel que précédemment défini.

Le matériau poreux selon l'invention peut être déposé entre deux plaques sur le trajet optique. L'étranglement du circuit millifluidique permet le maintien en bonne position du matériau. L'ensemble est inséré dans un porte-échantillon en Téflon équipé de deux fenêtres optiques en quartz. L'entrée et la sortie optiques du porte-échantillon sont reliées via des connecteurs de type SMA à des fibres optiques reliées d'une part à la source lumineuse et d'autre part au détecteur. Le matériau selon l'invention est inséré dans le système millifluidique. Ce dernier est placé dans la chambre d'exposition. On fait circuler le mélange gazeux dans le système millifluidique pendant un temps déterminé et suffisant pour observer des variations optiques notables (de quelques secondes à une heure environ). Pendant la durée de l'exposition, le spectre d'absorption du matériau poreux est collecté à intervalles de préférence réguliers (1 à 300 secondes) de la manière décrite ci-après. La lumière d'analyse provenant d'une lampe visible (tungstène) est véhiculée à l'aide d'une fibre optique vient éclairer en continu la fenêtre d'entrée de la chambre. Le faisceau de lumière, collimaté à l'aide d'une lentille (focale=10 mm) et d'un connecteur SMA placé sur la fenêtre d'entrée, vient éclairer le capteur sur une petite surface (typiquement de l'ordre de 1 mm²). La lumière transmise est collectée dans le même axe via une seconde lentille et un second connecteur SMA placé sur la fenêtre de sortie de la chambre. Le faisceau de lumière transmis est véhiculé à l'aide d'une fibre optique vers un spectrophotomètre éventuellement miniature. Un spectre d'absorption du capteur est collecté à intervalles réguliers, chaque acquisition durant de 8 à 1000 msec (notamment 800 msec).

D'autres caractéristiques et avantages de la présente invention apparaîtront encore à la lecture des exemples ci-après donnés à titre illustratif et non limitatif.

### BRÈVE DESCRIPTION DES DESSINS

La Figure 1 (comparative) présente les spectres de xérogels dopés avec la molécule DMPD après expositions au sulfure d'hydrogène dans diverses conditions d'hygrométrie (air, argon sec, air séché au CaCl₂, argon humidifié (55% d'hygrométrie) et air humidifié (55% hygrométrie)).
La Figure 2A présente les cinétiques de réaction en solution aqueuse à pH=7,4 pour les réactions sonde-cible : (CH₃)SNa (MeSNa) 50 µM et DTNB 5 µM ; Na₂S (sulfure d'hydrogène déprotoné) 50 µM et DTNB 5 µM. La Figure 2B présente les spectres d'absorbance en fonction du temps pour une réaction à pH neutre entre le DTNB 25 µM et Na₂S 250 µM. La Figure 2C présente les spectres d'absorbance en fonction du temps pour une réaction à pH neutre entre le DTNB 25 µM et (CH₃)SNa 250 µM.
La Figure 3A présente les photographies, à l'issue du séchage, des xérogels dopés au DTNB et la Figure 3B présente le spectre d'absorbance d'un monolithe avec le dopage maximal (0,01 M dans le sol, soit 0,08 M dans le xérogel).
La Figure 4A présente les photographies de xérogels (dopage [DTNB]_{xérogel} = 0,08 M) à l'issue du séchage (porogène : 3% mol. APTES), avant et après exposition au H₂S (2h, temp. ambiante). Les Figures 4B et 4C présentent les spectres d'absorbance, entre 300 et 800 nm, de ces mêmes xérogels avant et après exposition (2 h, temp. ambiante) à 10 ppm et 1000 ppm de H₂S. Les Figures 4D et 4E présentent les spectres d'absorbance avant et après exposition à 10 ppm et 1000 ppm de méthanethiol (MeSH) (2h, temp. ambiante).
La Figure 5 présente les spectres d'absorbance, entre 300 et 800 nm, de xérogels à 3% mol. ABTES et [DTNB]_{xérogel} = 0,08 M, avant et après exposition (3h, temp. ambiante) à 100 ppm de H₂S (Figure 5A) et 10 ppm de H₂S (Figure 5B).
La Figure 6 présente l'exposition de capteurs à une culture bactérienne en milieu liquide. La Figure 6A est un schéma du dispositif avec (1) un tube plastique *Falcon* (Becton Dickinson) de 50 ml, (2) 20 ml de milieu culture liquide (10⁵ cfu/ml à t = 0), (3) le xérogel nanoporeux dopé au DTNB, (4) une structure métallique percée (couronne) supportant le xérogel. Il n'y a jamais contact entre le monolithe et la phase liquide. La Figure 6B est une photographie du dispositif, avec un monolithe qui a été exposé une nuit à une culture (37°C) de C. *freundii* ATCC 8090.
La Figure 7 présente l'exposition de capteurs à une culture bactérienne sur milieu gélosé. La Figure 7A est un schéma du dispositif. La Figure 7B est une photographie du dispositif, avec un monolithe qui a été exposé une nuit à une culture (37°C) de C. *freundii* ATCC 8090.
La Figure 8 présente les changements de couleurs observés après exposition de monolithes dopés avec différentes quantités de DTNB, une nuit à 20 mL de culture liquide de C. *freundii* (CF7) ou *H. alvei* ATCC 13337 (HA4), à 37°C en conditions anaérobies.
La Figure 9 présente les spectres d'absorbance relevés sur trois monolithes à dopage croissant ([DNTB]ₛₒₗ = 0,001 M, 0,002 M et 0,005 M), après exposition une nuit à 20 mL de culture liquide de C. *freundii* (CF7), à 37°C en conditions anaérobies.

### EXPOSÉ DÉTAILLÉ DE MODES DE RÉALISATION PARTICULIERS

### Exemple 1 (Comparatif) : Matériau sol-gel contenant du DMPD.

Au vu des propriétés de la DMPD précédemment exposées et des propriétés recherchées pour un capteur, les inventeurs ont préparé des xérogels tels que décrits dans la demande internationale WO 2011/058066 **[31]** en utilisant comme molécule-sonde la DMPD.

Comme un oxydant est nécessaire pour activer la sonde DMPD i.e. pour la transformer en un intermédiaire capable de réagir sur le sulfure (Schéma 1(d)), les xérogels ont été préparés comme suit. Le sol utilisé pour la synthèse de capteurs contient du tétraméthylorthosilicate (CAS 681-84-5) pur à 98% de chez Fluka, de l'éthanol (CAS 64-17-5) de pureté spectrophotométrique à 96% de chez Fluka, et de l'eau MilliQ. Les proportions entre le tétraméthylorthosilicate (TMOS), l'éthanol (EtOH) et l'eau suivent les ratios molaires suivants : 1/4/4. Pour 9,02 mL de sol, sont donc mélangés 2,92 mL de TMOS, 4,66 mL d'EtOH et 1,44 mL d'eau. L'acide chlorhydrique (CAS 7647-01-0, noté HCl) à 37%, la N,N-diméthyl-para-phénylènediamine (CAS 536-46-9, notée DMPD)) et le chlorure de fer (III) (CAS 7705-08-0, noté FeCl₃) sont solubles dans l'eau. Ils sont incorporés dans les 1,44 mL d'eau.

Le TMOS et l'éthanol sont mélangés dans un premier temps. Puis le volume désiré de DMPD à 0,5 M dans l'eau est introduit, suivi du volume désiré de FeCl₃ à 0,5 M dans 0,267 M HCl. La quantité d'eau restante pour atteindre 1,44 mL suit l'ajout d'HCl provoquant un échauffement du sol qui est agité le temps de refroidir. Pour les formulations fortement dopées en DMPD, il est nécessaire de dissoudre la DMPD dans l'éthanol plutôt que dans l'eau. La limite de solubilité de la DMPD dans l'éthanol est de 21 mM.

Un mL de sol est versé dans des cuves en plastique de spectroscopie (EVERGREEN référence 64198). Les cuves sont bouchées et laissées à température ambiante jusqu'à ce que le sol gèle. Au bout de 2 à 4 jours, lorsque le sol est gelé, le bouchon est retiré et remplacé par un film adhésif poreux (taille de pores : 10-50 µm, Greiner Bio-One, référence 676050) afin de commencer le séchage. Après 3 jours, ce film est remplacé par un film adhésif plus poreux pour accélérer le séchage (ThermoScientific, référence AB-0718). Au bout d'une semaine, tout l'alcool s'est évaporé et le monolithe est sec et peut être stocké à -20°C, sous argon, dans un flacon en verre.

Les réactifs employés sont repris dans le Tableau 1 ci-après :

**Tableau 1**

| [DMPD] ₘₒₙₒ (en mol.dm⁻³) | [FeCl₃] ₘₒₙₒ (en mol.dm⁻³) | [HCl] ₘₒₙₒ (en mol.dm⁻³) | Atmosphère | Couleur en fin de séchage |
|---|---|---|---|---|
| 0,05 | 0,025 | 2 | Argon | jaune |

Toutefois, les xérogels dopés avec de la DMPD et un oxydant sont peu sensibles vis-à-vis du sulfure d'hydrogène. Dans le meilleur des cas, leur limite de détection est autour de 1000 ppm, ce qui est tout à fait insuffisant.

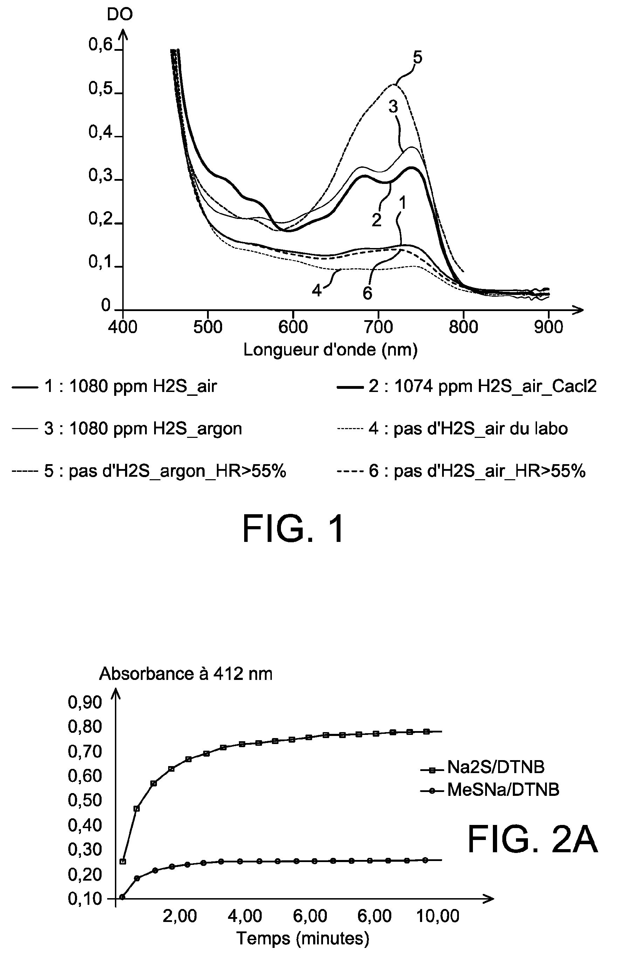

La Figure 1 illustre le problème crucial de la sensibilité à l'hygrométrie qui dégrade encore plus les résultats. En conditions sèches (spectres (2) et (3)), du bleu de méthylène se forme dans le xérogel, avec ses deux pics caractéristiques à 678 et 745 nm. En l'absence de sulfure d'hydrogène, mais en présence d'eau (spectres (4), (5) et (6)), des sous-produits absorbant entre 715 et 750 nm apparaissent et donnent un résultat erroné (faux positifs). En conséquence, lors d'une exposition du capteur au sulfure d'hydrogène en conditions humides (spectre (1)), une compétition s'instaure entre l'eau et le sulfure d'hydrogène.

### Exemple 2 : Matériau sol-gel contenant du DTNB.

### 2.1. Le DTNB.

L'acide 5,5'-dithiobis(2-nitrobenzoïque), appelé DTNB ou « réactif d'Ellman » est la molécule-sonde de la famille des disulfures aromatiques substitués testée dans la présente. Cette molécule-sonde présente l'avantage d'être directement sous sa forme réactive vis-à-vis de la cible, avec une stoechiométrie sonde/cible de 1/1. Le DTNB voit son pont disulfure rompu en présence de composés soufrés, pour former un thiophénol, l'acide 2-nitro-5-thiobenzoïque (TNB) (Schéma 2). C'est ce dernier qui permet la transduction optique car il absorbe beaucoup à 412 nm (17000 L.mol⁻¹.cm⁻¹ d'après la littérature), contrairement à l'autre produit de la réaction (211 L.mol⁻¹.cm⁻¹).

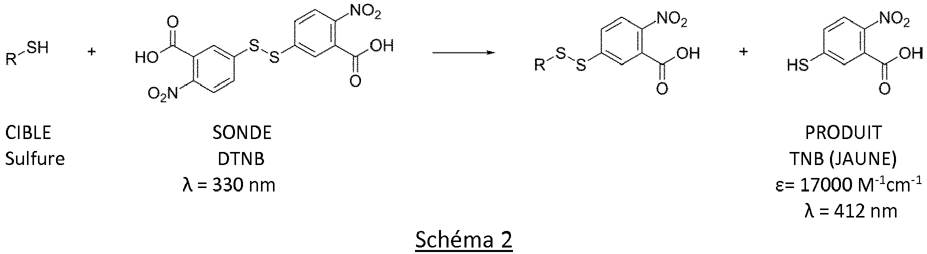

Le DTNB est ainsi couramment employé pour la détection de protéines **[32]** ou de peptides **[33]** contenant une fonction thiol, tel que le glutathion, tripeptide soufré qui intervient dans l'homéostasie redox des cellules.

Il faut noter que la réaction n'est pas sélective car le DTNB détecte à la fois les thiols (thioalcanes et thiophénols), les thiosulfates et les sulfures **[34].** Il s'agit donc d'une sonde pour la détermination des produits soufrés totaux. Comme tous ces composés soufrés réagissent avec le DTNB pour former le TNB, la quantité de TNB formée est une indication de la teneur totale en VSC.

Une étude de la réaction en solution a montré que le DTNB n'est pas stable en milieu basique, puisqu'à partir de pH 9, la rupture du pont disulfure se fait d'elle-même en quelques heures. Or, en milieu acide, les VSC modèles, à savoir le sulfure d'hydrogène et le méthanethiol, sont peu solubles. La présente étude a donc été menée en solution à pH neutre et, par conséquent sur les formes déprotonées Na₂S et (CH₃)SNa des deux VSC modèles.

Cette étude a montré que la cinétique de la réaction est suffisamment rapide pour envisager de l'employer dans un xérogel comme réaction de transduction : en moins de 5 min, l'équilibre est atteint (Figure 2A). On peut remarquer également que la réaction de détection du (CH₃)SNa est moins rapide que celle de Na₂S, avec en outre un moins bon rendement.

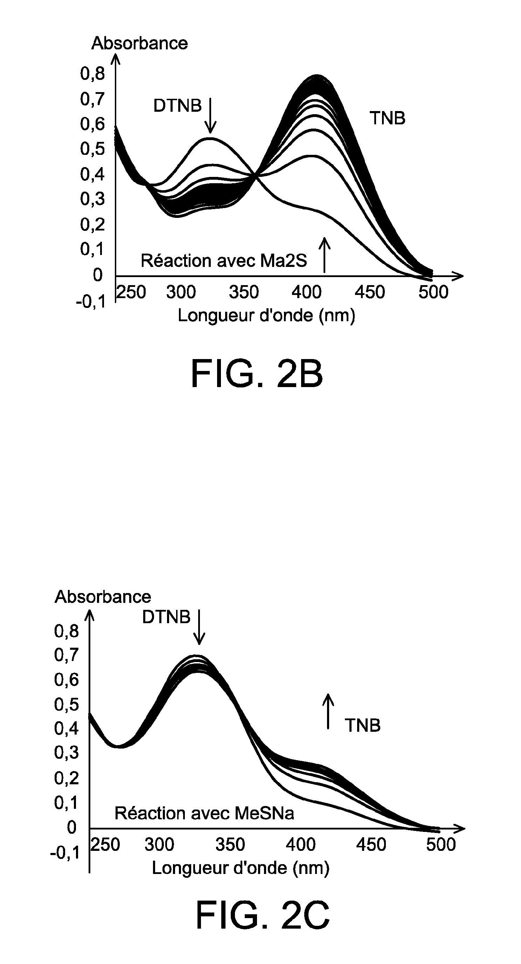

De plus, l'absorbance de la sonde DTNB se trouve dans une gamme de longueurs d'onde proches de celles où absorbe le produit TNB. La sonde DTNB présente, en effet, un coefficient d'extinction molaire maximal de près de 13 000 L.mol⁻¹.cm⁻¹ à 330 nm, alors que le TNB absorbe à 410 nm, avec une extinction molaire comparable (valeur mesurée : 13 000 L.mol⁻¹.cm⁻¹). Sur la base des résultats de cette étude (Figures 2B et 2C), la quantité de DTNB utilisée pour préparer les xérogels a été choisie de façon à ne pas masquer l'apparition du pic de TNB.

### 2.2. Synthèse des capteurs.

Deux formulations pour le capteur qui diffèrent de par le porogène employé ont été mises en oeuvre : l'une recourt au 3-aminopropyltriéthoxysilane (APTES, Si(C₃H₆NH₂)(OC₂H₅)₃), l'autre au 3-aminobutyltriéthoxysilane (ABTES, Si(C₄H₈NH₂)(OC₂H₅)₃).

Les sols à la base des xérogels selon l'invention sont préparés à -20°C pour ralentir le processus de gélification et avoir le temps de procéder à la mise en forme, c'est-à-dire le remplissage des moules avec la solution méthanolique de précurseur de l'oxyde, le tétraméthoxysilane (TMOS, Si(OCH₃)₄), et de précurseur porogène, APTES ou ABTES.

Le méthanol et la solution de DNTB dans le méthanol sont introduits dans un ballon sec avec agitation, le TMOS puis l'APTES sont introduits, dans un ratio molaire APTES/TMOS de 0,03, suivis de l'eau ultra-pure. Les réactifs employés sont repris dans le Tableau 2 ci-après :

**Tableau 2**

| | | | | |
|---|---|---|---|---|
| [DTNB] monolithes (mol.L⁻¹) | 0,080 | 0,040 | 0,016 | 0,008 |
| [DTNB] sol (mol.L-1) | 0,010 | 0,005 | 0,002 | 0,001 |
| TMOS (mL) | 3,5711 | 3,5711 | 3,5711 | 3,5711 |
| DTNB 0,2 M dans le MeOH (mL) | 0,5164 | 0,2582 | 0,1033 | 0,0516 |
| MeOH (mL) | 4,293 | 4,551 | 4,706 | 4,757 |
| APTES (mL) | 0,169 | 0,169 | 0,169 | 0,169 |
| Eau (mL) | 1,728 | 1,728 | 1,728 | 1,728 |
| Total (mL) | 10,277 | 10,277 | 10,277 | 10,277 |

Le sol est ensuite mis en forme dans les moules, des cuves de spectroscopie, à raison de 1 ml de sol par cuve. Les cuves sont bouchées pendant 24 h puis le bouchon est remplacé par un film microporeux pour laisser évaporer les solvants. A l'issue du séchage, une semaine après le moulage, un monolithe parallélépipédique de dimensions 5x12x2 mm est obtenu.

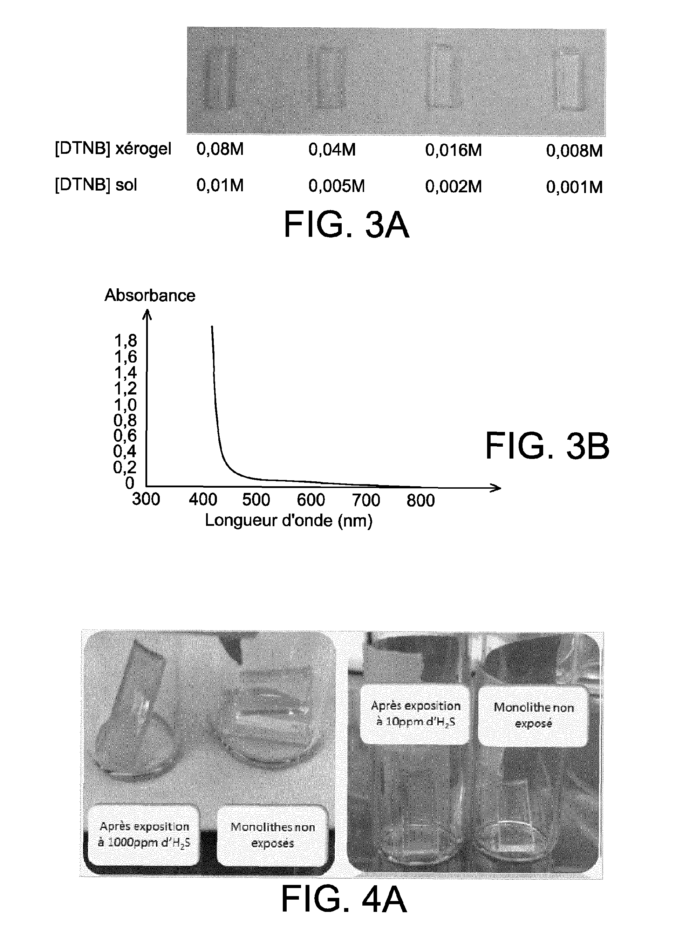

Des monolithes contenant différentes quantités de dopant ont été synthétisés: 0,010 M, 0,005 M, 0,002 M et 0,001 M en DTNB dans le sol (Tableau 2). Pour connaître la concentration finale dans le xérogel après séchage, il suffit de multiplier ces valeurs par huit car entre le sol et le xérogel, il y a une rétractation d'un facteur 2 sur chacune des dimensions. Les Figures 3A et 3B représentent les photographies des xérogels à l'issue du séchage, ainsi que le spectre d'absorbance d'un monolithe avec le dopage maximal (0,01 M dans le sol, soit 0,08 M dans le xérogel).

Des résultats comparables ont été obtenus en utilisant comme porogène l'ABTES, toujours dans un ratio molaire porogène/TMOS de 0,03.

### Exemple 3 : Utilisation dans la détection de VSC d'origine chimique.

En ce qui concerne l'exposition des capteurs à des VSC synthétiques i.e. d'origine chimique, le sulfure d'hydrogène et le méthanethiol ont été étudiés comme exemples de VSC.

Pour des raisons de sécurité, le sulfure d'hydrogène pur en bouteille ne peut être manipulé. Les bouteilles de sulfure d'hydrogène, quant à elles, sont à des concentrations trop faibles (6 ppm dans N₂) ne permettant pas de couvrir les fortes concentrations (10 à 1000 ppm).

Par conséquent, du sulfure déprotoné Na₂S, concentré en phase aqueuse a été choisi et un acide fort (HCl) lui a été ajouté de manière à générer du H₂S *in situ.* Le sulfure d'hydrogène se prête bien à un tel protocole car sa constante de Henry est élevée (4,09.10⁻¹). Ainsi, pour arriver à une teneur aussi forte que 1000 ppm en phase gaz, il suffit de générer 0,101 mM en phase aqueuse. Le calcul est le suivant : une teneur en H₂S de 1000 ppm correspond à une pression partielle de 1000x10-⁶x101325 = 101,325 Pa. Cette pression partielle correspond à une concentration molaire en phase gaz [H₂S]_{g} = n_{H2S}/Vg = P_{H2S}/RT = 4,13.10-² mol.m⁻³ (T = 295 K). Grâce à la valeur de la constante de Henry Hcc = [H₂S]_{g}/[H₂S]_{liq} = 4,09.10⁻¹ (grandeur sans dimension), on peut en déduire la concentration en H₂S à atteindre en phase aqueuse à l'équilibre : [H₂S]_{liq} = [H₂S]_{g}/H_{cc} = 0,101 mM. Ce calcul est valide car cette dernière valeur est bien inférieure à la solubilité du H₂S dans l'eau (0,11 mol.L⁻¹).

C'est un protocole semblable qui a été adopté pour les expositions au méthanethiol, en partant d'une solution aqueuse neutre de méthanethiol déprotoné, MeSNa, qui est acidifiée pour générer *in situ* le thiol. De plus, pour le CH₃SH, les calculs se font d'une manière analogue à celle employée pour H₂S, avec Hcc = [CH₃SH]_{g}/[CH₃SH]_{liq} = 1,23.10⁻¹. On obtient [CH₃SH]_{liq} = 0,335 mM, ce qui est inférieur à la solubilité du CH₃SH dans l'eau (0,48 mol.L⁻¹).

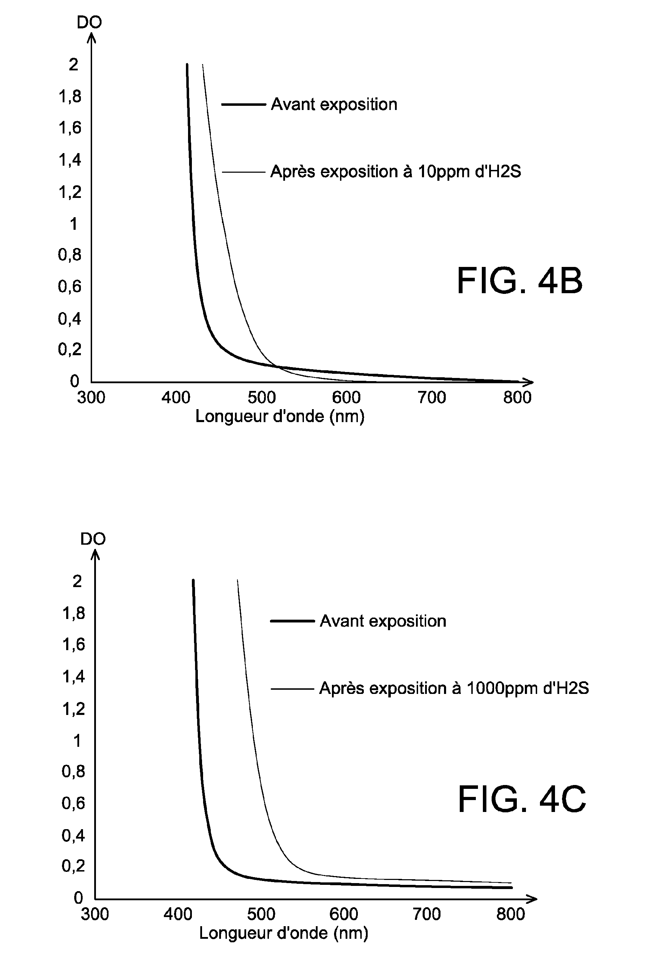

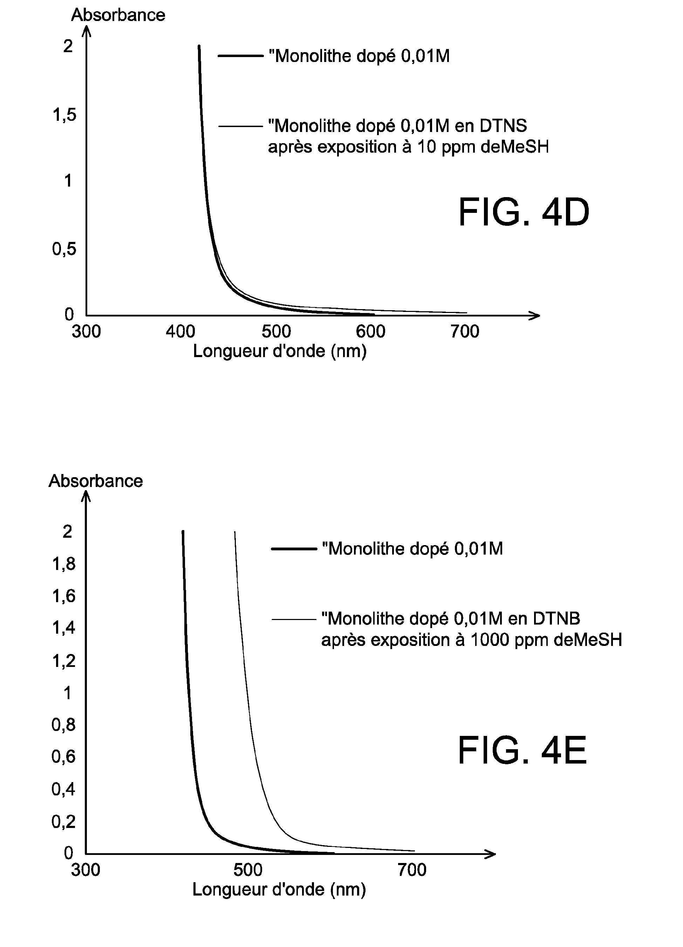

La Figure 4 illustre, pour un xérogel à 3% mol. APTES, les modifications de couleur induite par une exposition au H₂S, ainsi que les modifications du spectre d'absorbance qui en résultent. Le capteur après exposition passe d'un jaune pâle à un jaune-orangé, voire un orange vif, à mesure que le xérogel capture les molécules sulfurées cibles (Figure 4A). La disparition du DTNB et la formation de TNB (réaction illustrée en Figure 2) entraînent en effet un « déplacement » du pic d'absorbance du xérogel vers le rouge (Figures 4B, 4C, 4D et 4E).

On peut remarquer que, pour un même dopage, le capteur n'est pas aussi sensible au méthanethiol qu'au sulfure d'hydrogène : là où une exposition à 10 ppm de H₂S conduit à un décalage de 45 nm (à DO=O,4; Figure 4B), la même teneur en (CH₃)SH ne provoque aucune translation sensible de la courbe d'absorbance (Figure 4D).

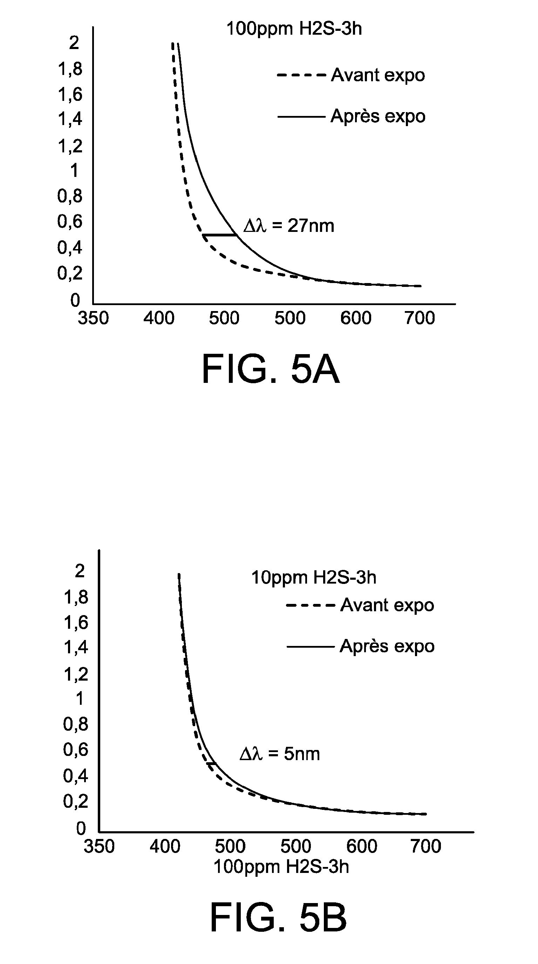

Des expériences ont également été conduites dans le cas où le porogène est l'ABTES, dans des conditions analogues (ABTES/TMOS = 3% mol. et [DTNB]_{xérogel} = 0,08 M). La Figure 5 indique le décalage vers le rouge des spectres de monolithes exposés au H₂S (100 ppm (Figure 5A) et 10 ppm (Figure 5B)) à température ambiante pendant 3 h. On relève la valeur Δλ en nm de ce décalage au niveau de l'ordonnée D.O. = 0,5 (spectres acquis avec un chemin optique de 2 mm). Une pseudo-cinétique a également été réalisée à 10 ppm en erlenmeyers de 50 mL: différents monolithes d'un même lot ont été exposés à une même teneur, chacun dans des récipients différents et sur des durées croissantes.

On a pu ainsi détecter 10 ppm de H₂S en moins de 15 min, ce qui correspond à une limite de détection de 2,5 ppm.h, une valeur proche de celle annoncée pour le dosimètre SAFEAIR^{®} de la société Morphix Technologies (2,0 ppm.h.).

### Exemple 4 : Utilisation dans la détection de VSC d'origine bactérienne.

Dans un environnement industriel, la mise en oeuvre des capteurs selon l'invention est plus aisée car l'atmosphère à laquelle les VSC cibles sont mêlés est a priori peu complexe. Ça n'est pas le cas lors d'expositions à des VSC d'origine microbienne : ils sont alors intégrés à un mélange complexe d'un grand nombre de métabolites volatils de familles chimiques diverses tels que, par exemple, des amines aromatiques et aliphatiques, des cétones, des alcools, des aldéhydes, des acides gras, des terpènes, etc. Certains d'entre eux pourraient interférer dans la détection. C'est pourquoi les inventeurs ont également procédé à des tests dans lesquels les capteurs selon l'invention ont été mis en présence de souches bactériennes en croissance sur des milieux nutritifs liquides (Figure 6) ou gélosés (Figure 7).

La composition du milieu nutritif liquide utilisé est donnée dans le Tableau 3 ci-après :

**Tableau 3**

| | | Pour 100 ml |
|---|---|---|
| Milieu riche : Tryptic Soy Broth (TSB) Biomérieux : bouillon tryptophane-soja | Hydrolysat pancréatique de caséine | 1,700 g |
| | Hydrolysat enzymatique de soja | 0,300 g |
| | Dextrose | 0,250 g |
| | Chlorure de sodium (NaCl) | 0,500 g |
| | Phosphate de potassium (K₂HPO₄) | 0,250 g |
| Source de soufre oxydé | Thiosulfate de sodium (Na₂S₂O₃) 6,32 mM | 0,100 g |
| Tampon pH 6,1 | MES, forme acide monohydrate, 75 mM | 1,599 g |
| | MES, sel de sodium, 75 mM | 1,629 g |

A ce milieu liquide, est ajouté un agent gélifiant (1,50 g d'agar pour 100 ml de milieu liquide) pour donner le milieu gélosé (Figure 7).

Le milieu de culture choisi pour les tests est un milieu riche non spécifique classiquement employé en diagnostic, le TSB, auquel a été ajouté un nutriment soufré pour être sûr d'obtenir la formation de VSC en quantités sensibles. Ce nutriment soufré est une forme oxydée (thiosulfate) de l'élément soufre (nombre d'oxydation n.o. des deux atomes de S : l'un à +V, l'autre à -I).

En conditions aérobies, les bactéries utilisent O₂ (n.o.(O) = 0) comme accepteurs d'électrons dans leur métabolisme et le réduisent en eau (n.o.(O) = -II). En l'absence d'oxygène (conditions anaérobies), certaines espèces bactériennes sont capables de remplacer O₂ par d'autres accepteurs d'électrons, soit des formes oxydées de l'azote (nitrites, nitrates), soit des formes oxydées du soufre (sulfites, sulfates, thiosulfates). Elles génèrent alors des formes réduites de l'azote (amines, n.o.(N) = -III) ou du soufre (sulfures, n.o.(S) = -II). En conclusion, en ajoutant du thiosulfate de sodium au milieu nutritif, la formation de sulfures en conditions anaérobies est induite pour les espèces présentant une activité « thiosulfate réductase ».

Notons enfin que la présence du tampon MES (acide ß-MorpholinoEthaneSulfonique) stabilise le pH des milieux à une valeur (6,1) à laquelle le sulfure d'hydrogène et le méthanethiol sont majoritairement sous leurs formes moléculaires. En effet, leurs pKa respectifs sont 7,0 et 12,0 (couples H₂S/HS⁻ et CH₃SH/CH₃S⁻). On favorise ainsi la forme sous laquelle ils sont volatils.

Les souches bactériennes mises en oeuvre ont été choisies dans le phylum des Proteobacteria et la classe des Gammaproteobacteria. Dans cette dernière, ont été représentés à la fois l'ordre des *Enterobacteriales* et celui des *Pseudomonadales* (souche de *Pseudomonas putida)* (Tableau 4). Une souche représentant chacune un genre différent *(Hafnia, Citrobacter, Enterobacter* et *Escherichia)* a été choisie parmi la famille des *Enterobacteriaceae et pour* la même espèce *(Escherichia coli),* quatre souches (ATCC 25922, 8739, 35421 et 11775) ont été choisies. Ainsi, les inventeurs disposent, dans leur modèle biologique, de souches très voisines phylogénétiquement, et d'autres bien plus éloignées. Parmi les huit souches du modèle, seule E. *cloacae* ATCC13047 présente l'activité thiosulfate réductase (activité testée en conditions anaérobies sur galeries API 20E bioMérieux, test « H₂S »).

**Tableau 4**

| Ordre | Famille | Genre | Espèce | Souche |
|---|---|---|---|---|
| Pseudomonadales | Pseudomonadaceae | Pseudomonas | P. putida | ATCC 12633 |
| Enterobacteriales | Enterobacteriaceae | Hafnia | H. alvei | ATCC 13337 |
| | | Citrobacter | C. freundii | ATCC 8090 |
| | | Enterobacter | E. cloacae | ATCC 13047 |
| | | Escherichia | E. coli | ATCC 25922 |
| | | | | ATCC 8739 |
| | | | | ATCC 35421 |
| | | | | ATCC 11775 |

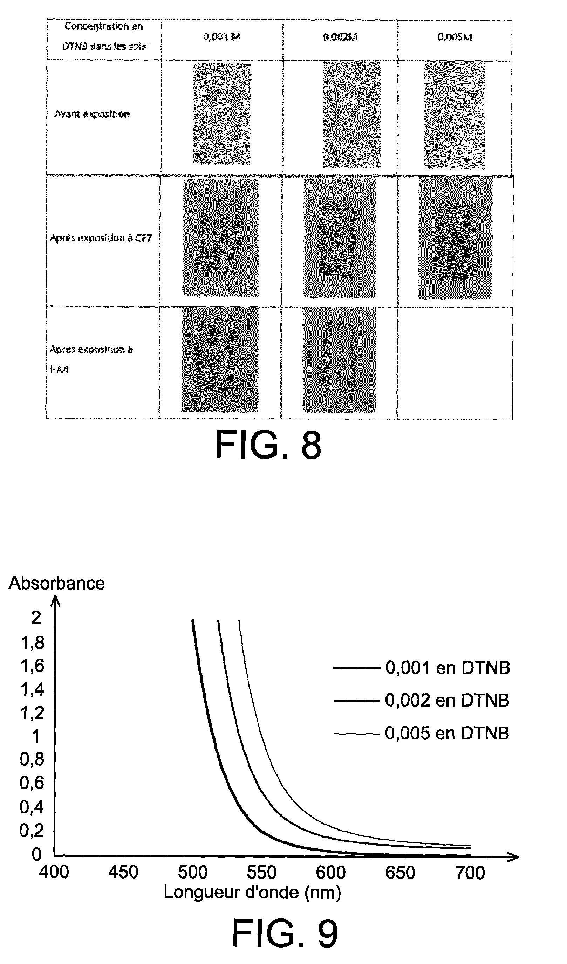

Les tests en présence de cultures bactériennes en milieu liquide (Figure 6) ont été réalisés avec *H. alvei* ATCC 13337 et C. *freundii* ATCC 8090 seulement. Dans les deux cas, la charge bactérienne initiale est de 10⁵ cfu/ml, la culture est incubée une nuit à 37°C en conditions anaérobies (sous argon), avec le capteur présent dans la phase gaz du flacon dès le début de l'expérience. Pour les deux souches, le changement de couleur est visible pour les trois dopages testés (Figure 8). Comme attendu, le changement de couleur est significativement plus intense pour la souche qui peut réduire le thiosulfate, à savoir C. *freundii* ATCC 8090. Pour cette dernière, la spectrophotométrie des monolithes après exposition révèle un décalage vers le rouge d'autant plus fort que le dopage est important (Figure 9).

Les tests avec cultures bactériennes sur milieu gélosé ont été effectués sur les 8 souches du modèle, à 37°C, en conditions aérobies et anaérobies (sous N₂), avec une charge bactérienne initiale d'environ 10⁵ cfu/boîte. Les boîtes de Petri avec leurs capteurs à l'issue de l'incubation (une nuit à 37°C) sont scellées hermétiquement avec du scotch pour confiner les VSC.

La présence de desséchant CaCl₂ autour du monolithe, comme schématisé sur la Figure 7A, permet d'éviter une éventuelle condensation d'eau liquide à la surface du xérogel. Le CaCl₂ assure également une bonne visibilité du capteur à travers le couvercle pendant toute la durée de l'expérience. Cette dernière expérience révèle à nouveau que c'est la souche C. *freundii* ATCC 8090, en anaérobiose, qui produit le plus de VSC.

En conclusion, les capteurs selon l'invention sont capables de fonctionner dans les conditions difficiles d'un test biologique : (i) avec beaucoup d'humidité, comme l'ont montré notamment les expériences avec des cultures en milieu liquide, et (ii) avec de nombreux interférents potentiels. Enfin, on peut remarquer que les capteurs selon l'invention fonctionnent bien en mode non invasif, puisqu'ils ne perturbent pas la croissance bactérienne.

### RÉFÉRENCES

**[1]** Analytical strategies for the détection of sulfide: a review, Lawrence, N. S.; Davis, J. and Compton, R. G., Talanta, 2000, 52, 771-784.
**[2]** Detecting hydrogen sulfide by using transparent polymer with embedded CdSe/CdS quantum dots, H. Xu, J. E. Wu, C.-H. Chen, L. Zhang and K.-L. Yang, Sensors and Actuators B: Chemical, 2010, 143, 535-538.
**[3]** Fluorescein mercuric acetate-A novel sensor for oral malodour detection, Jayaraman, S.; Walla, R. and Alagirisamy, N., Sensors and Actuators B-Chemical, 2010, 148, 54-58.
**[4]** Electrochemical Detection of Trace Hydrogen Sulfide in Gaseous Samples by Porous Silver Electrodes Supported on Ion-Exchange Membranes (Solid Polymer Electrolytes), G. Schiavon, G. Zotti, R. Toniolo and G. Bontempelli, Analytical Chemistry, 1995, 67, 318-323.
**[5]** A flow analysis system with an amperometric detector for the determination of hydrogen sulphide in waters, P. Jeroschewski and S. Braun, Fresenius' Journal of Analytical Chemistry, 1996, 354, 169-172.
**[6]** Flower-like hierarchical zinc oxide architectures: Synthesis and gas sensing properties, Y. Cao, X. Hu, D. Wang, Y. Sun, P. Sun, J. Zheng, J. Ma and G. Lu, Materials Letters, 2012, 69, 45-47.
**[7]** Reactive adsorption of acidic gases on MOF/graphite oxide composites, C. Petit, B. Levasseur, B. Mendoza and T. J. Bandosz, Microporous and Mesoporous Materials Special Issue: Characterisation of Porous Solids IX, 2012, 154, 107-112.
**[8]** Hydrogen sulfide sensing properties of multi walled carbon nanotubes, N. Izadi, A. M. Rashidi, S. Golzardi, Z. Talaei, A. R. Mahjoub and M. H. Aghili, Ceramics International, 2012, 38, 65-75.
**[9]** Gas Sensor Array Based on Metal-Decorated Carbon Nanotubes, A. Star, V. Joshi, S. Skarupo, D. Thomas and J.-C. P. Gabriel, Journal of Physical Chemistry B, 2006, 110, 21014-21020.
**[10]** A review of sensor-based methods for monitoring hydrogen sulfide, S. K. Pandey, K.-H. Kim and K.-T. Tang, TrAC Trends in Analytical Chemistry, 2012, 32, 87-99.
**[11]** A nanoporous interferometric micro-sensor for biomedical détection of volatile sulphur compounds, T. Kumeria, L. Parkinson and D. Losic, Nanoscale Research Letters, 2011, 6, 634.
**[12]** A colorimetric sensor array for identification of toxic gases below permissible exposure limits, L. Feng, C. J. Musto, J. W. KemJing, S. H. Um and K. S. Suslick, Chemical Communications, 2010, 46, 2037-2039.
**[13] Direct-read colorimetric exposimeter,** G. M. Mihaylov, K. S. Kirollos, K. L. Lockerby, 1994, brevet US 5,364,593.
**[14] Self appearing warning sign device and method of manufacture,** K. S. Kirollos, G. M. Mihaylov, 2001, brevet US 6,284,198.
**[15]** Determination of Hydrogen sulfide in air-an assesment of impregnated paper tape methods, D. F.S. Natusch, J. R. Sewell and R. L. Tanner, Analytical Chemistry, 1974, 46, 410-415.
**[16]** Fast détection of hydrogen sulfide using a biodegradable colorimetric indicator system, T. K. J. Edison, C. M. Yoshida, A. B. Reis, I. S. Melo and T. T. Franco, Polymer International, 2011, 60, 951-956*.*
**[17]** The use of thin silver films for the détection of low concentrations of hydrogen sulphide, S. J. Hawkins, N. M. Ratcliffe and A. Sagastizabal, Analytica Chimica Acta, 1998, 359, 125-132.
**[18]** Active silica-gel films for hydrogen sulfide optical sensor application, M. R. Shahriari and J. Ding, Optics Letters, 1994, 19, 1085-1087.
**[19]** Development of an optical hydrogen sulphide sensor, M. M. F. Choi and P. Hawkins, Sensors and Actuators B: Chemical, 2003, 90, 211-215*.*
**[20]** Detecting hydrogen sulfide by using transparent polymer by embedded CdSe/CdS quantum dots, H. Xu, J.E. Wu, C.-H. Chen, L. Zhang and K.-L. Yang, Sensors and Actuators B: Chemical, 2010, 143, 535-538.
**[21]** Simple detector for oral malodour based on spectrofluorimetric measurements of hydrogen sulphide in mouth air, J. Rodriguez-Fernandez, J. M. Costa, R. Pereiro and A. Sanz-Medel, Analytica Chimica Acta, 1999, 398, 23-31.
**[22]** Optical fibre sensor for hydrogen sulphide monitoring in mouth air, J. Rodriguez-Fernandez, R. Pereiro and A. Sanz-Medel, Analytica Chimica Acta, 2002, 471, 13-23.
**[23]** Spectrophotometric determination of trace amounts of sulfide ion based on its catalytic reduction oftoluidine blue, M. F. Mousavi and M. Shamsipur, Bulletin of the Chemical Society of Japan, 1992, 65, 2770-2772.
**[24]** Kinetic-spectrophotometric determination of sulfide by its reaction with resazurln, A. Safavi, A. Rahmani and V. N. Hosseini, Journal of analytical chemistry, 1996, 354, 502-504.
**[25]** A colorimetric response to hydrogen sulfide, K. J. Wallace, S. R. Cordero, C. P. Tan, V. M. Lynch and E. V Anslyn, Sensors and Actuators B: Chemical, 2007, 120, 362-367.
**[26]** A sorbent tube for oral malodour monitoring, J. Rodriguez-Fernandez, R. Lopez-Fernandez, R. Pereiro, M. Menendez, J. M. Tejerina, A. Sicilia and A. Sanz-Medel, Talanta, 2004, 62, 421-426.
**[27]** Measurement of Parts per Million Level Gaseous Concentration of Hydrogen Sulfide by Ultraviolet Spectroscopy using 1,1,1,5,5,5-Hexafluoropentan-2,4-dione as a Derivative by Reaction of Cu(hfac)(1,5-Cyclooctadiene), J. M. Davidson, Z. Pikramenou, A. Ponce and R. E. P. Winpenny, Analytical Chemistry, 2009, 81, 3669-3675.
**[28]** A novel sorbent tube for ambient hydrogen sulfide determination, M. Volkan, T. Eroglu, A. E. Eroglu, O. Y. Ataman, H. B. Mark Jr, Talanta, 1998, 47, 585-593.
**[29]** Nitroprusside and Methylene Blue Methods for Silicone Membrane Differentiated Flow Injection Determination of Sulfide in Water and Wastewater, V. Kuban, P. K. Dasgupta and J. N. Marx. Analytical Chemistry, 1992, 64, 36-43.
**[30]** M. A. Spaziani, J. L. Davis, M. Tinani and M. K. Carroll, On-line Determination of Sulfide by the 'Methylene Blue Method' With Diode-laser-based Fluorescence Detection, The Analyst, 1997, 122, 1555-1557.
**[31] Material and method for trapping, detecting and quantifying heterocylic aromatic compounds and others,** S. Crunaire, T.-H. Tran-Thi, 2011, demande internationale WO 2011/058066.
**[32]** Estimation of total, protein-bound, and nonprotein sulfhydryl groups In tissue with Ellman's reagent, J. Sedlak, R.H. Lindsay, Analytical Biochemistry, 1967, 25, 192-205.
**[33]** Methods for the Determination of Plasma or Tissue Glutathione Levels, T.E. Tipple, L.K. Rogers, Methods in Molecular Biology, 2012, 315-324.
**[34]** Spectrophotometric determination of sulfite with 4,4'-dithiodipyridine and 5,5'-dithiobis(2-nitrobenzoic acid), R. E. Humphrey, M. H. Ward and W. Hinze, Analytical Chemistry, 1970, 42, 698-702.

## Revendications

1. Utilisation d'un matériau de type oxyde poreux et notamment matériau sol-gel poreux comprenant, comme molécule-sonde, au moins un disulfure aromatique substitué par au moins un groupement électroattracteur pour piéger et/ou détecter et éventuellement quantifier au moins un composé soufré volatil.

2. Utilisation selon la revendication 1, caractérisée en ce ledit matériau et notamment ledit matériau sol-gel présente à la fois des micropores et des mésopores.

3. Utilisation selon la revendication 1 ou 2, caractérisée en ce ledit matériau et notamment ledit matériau sol-gel est essentiellement constitué :
- d'unités d'au moins un premier alcoxysilane constituant le « squelette » du matériau sol-gel, ce premier alcoxysilane étant de formule Si(OR¹)₄ ou R²Si(OR³)₃ dans lesquelles R¹, R² et R³, identiques ou différents, représentent un groupement alkyle de 1 à 6 atomes de carbone et
- d'unités d'au moins un second alcoxysilane de formule R⁴Si(OR⁵)₃ dans laquelle R⁴ représente un groupement alkyle de 1 à 6 atomes de carbone substitué et R⁵ représente un groupement alkyle de 1 à 6 atomes de carbone,
ledit groupement R⁴ présentant une ou plusieurs substitutions, identiques ou différentes, par un élément choisi dans le groupe constitué par un halogène, un radical -NH₂, un radical -NHR⁸ avec R⁸ représentant un groupement alkyle de 1 à 6 atomes de carbone, un radical -COOH, un radical -COOR⁹ avec R⁹ représentant un groupement alkyle de 1 à 6 atomes de carbone et un radical -[O-C₂H₄]ₓ-OH avec x représentant un nombre entier compris entre 1 et 10 et notamment entre 1 et 5.

4. Utilisation selon la revendication 3, **caractérisée en ce que** ledit premier alcoxysilane est choisi dans le groupe constitué par le tétraméthoxysilane (TMOS, Si(OCH₃)₄), le tétraéthoxysilane (TEOS, Si(OC₂H₅)₄), le tétrapropoxysilane (TPOS, Si(OC₃H₇)₄), le tétrabutoxysilane (TBOS, Si(OC₄H₉)₄), le méthyltriméthoxysilane (MTMOS, (CH₃)Si(OCH₃)₃), l'éthyltriméthoxysilane (ETMOS, (C₂H₅)Si(OCH₃)₃), le propyltriméthoxysilane (PTMOS, (C₃H₇)Si(OCH₃)₃), le méthyltriéthoxysilane (MTEOS, (CH₃)Si(OC₂H₅)₃), l'éthyltriéthoxysilane (ETEOS, (C₂H₅)Si(OC₂H₅)₃) et le propyltriéthoxysilane (PTEOS, (C₃H₇)Si(OC₂H₅)₃) et leurs mélanges.

5. Utilisation selon la revendication 3 ou 4, **caractérisée en ce que** ledit second alcoxysilane est choisi dans le groupe constitué par le 3-aminopropyltriéthoxysilane (APTES, Si(C₃H₆NH₂)(OC₂H₅)₃), le 3-aminobutyltriéthoxysilane (ABTES, Si(C₄H₈NH₂)(OC₂H₅)₃), le 3-aminopropyltriméthoxysilane (APTMS, Si(C₃H₆NH₂)(OCH₃)₃), le (3-(méthylamino)propyl)triméthoxysilane (Si(C₃H₆NHCH₃) (OCH₃)₃), le 3-carboxypropyltriéthoxysilane (Si(C₃H₆CO₂H)(OC₂H₅)₃), le 3-carboxypropyltriméthoxysilane (Si(C₃H₆CO₂H)(OCH₃)₃), le 1,2-bis(triéthoxysilyl)éthane ((OC₂H₅)₃Si-CH₂-CH₂-Si(OC₂H₅)₃), le 1,2-bis(triméthoxysilyl)éthane ((OCH₃)₃Si-CH₂-CH₂-Si(OCH₃)₃), le (3,3,3-trichloropropyl)triéthoxysilane (Si(C₂H₅CCl₃)(OC₂H₅)₃) et le 3,3,3-trifluoropropyl-triméthoxysilane (Si(C₂H₅CF₃)(OCH₃)₃) et leurs mélanges.

6. Utilisation selon l'une quelconque des revendications 3 à 5, **caractérisée en ce que** le rapport molaire second(s) alcoxysilane(s)/ premier(s) alcoxysilane(s) est compris entre 0,005 et 0,25 ; notamment entre 0,01 et 0,10 ; et, en particulier, entre 0,02 et 0,05.

7. Utilisation selon l'une quelconque des revendications 1 à 6, **caractérisée en ce que** ledit disulfure aromatique substitué par au moins un groupement électroattracteur est un composé de formule (I) suivante : 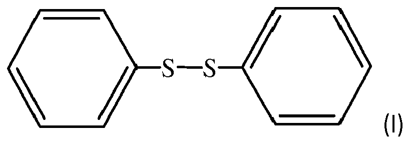 dans laquelle l'un et/ou l'autre des phényles est substitué par au moins un groupement électroattracteur.

8. Utilisation selon l'une quelconque des revendications 1 à 7, **caractérisée en ce que** ledit groupement électroattracteur est choisi parmi -F, -CI, -Br, -C(=O)-R¹⁰, -O-C(=O)-R¹⁰, -NO₂, -CN, -NR¹¹₃⁺, dans lesquels
- R¹⁰ est un atome d'hydrogène, un groupe -OH, un groupe alkyle éventuellement substitué, un groupe alcoxy éventuellement substitué ou un groupe aryle éventuellement substitué et
- R¹¹ est un atome d'hydrogène, un groupe alkyle éventuellement substitué ou un groupe aryle éventuellement substitué.

9. Utilisation selon l'une quelconque des revendications 1 à 8, **caractérisée en ce que** ledit disulfure aromatique substitué par au moins un groupement électroattracteur est l'acide 5,5'-dithiobis(2-nitrobenzoïque), appelé DTNB ou « réactif d'Ellman » de formule :

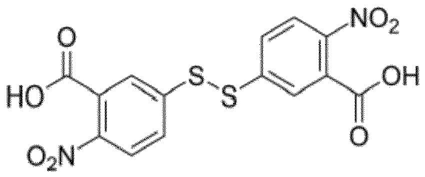

10. Utilisation selon l'une quelconque des revendications 1 à 9, **caractérisée en ce que** ledit composé soufré volatil est choisi dans le groupe constitué par le sulfure d'hydrogène (H₂S), le méthanethiol ((CH₃)SH), l'éthanethiol ((C₂H₅)SH), le sulfure de diméthyle ((CH₃)₂S), le sulfure de diéthyle ((C₂H₅)₂S), le disulfure de diméthyle ((CH₃)SS(CH₃)), le disulfure de diéthyle ((C₂H₅)SS(C₂H₅)), le trisulfure de diméthyle ((CH₃)SSS(CH₃)), le 2-méthyl-3-furanthiol (C₅H₆OS), le 3-(mercapto)hexylacetate (C₃H₇CH(SH)C₂H₄OC(O)CH le 3-mercaptohexan-1-ol (C₃H₇CH(SH)C₂H₄OH), l'acide 3-methylthio-proprionique (CH₃SC₂H₄COOH) et un de leurs mélanges.

11. Matériau sol-gel poreux tel que défini à l'une quelconque des revendications 3 à 9.

12. Procédé de préparation d'un matériau selon la revendication 11, comprenant les étapes successives suivantes consistant à :
a) mélanger au moins un premier alcoxysilane de formule Si(OR¹)₄ ou R²Si(OR³)₃ tel que défini à la revendication 3 ou 4 avec un solvant et au moins une molécule-sonde telle que définie à l'une quelconque des revendications 1 et 7 à 9 ;
b) ajouter au mélange de l'étape (a) au moins un second alcoxysilane de formule R⁴Si(OR⁵)₃ tel que défini à la revendication 3 ou 5 ;
c) ajouter au mélange de l'étape (b) de l'eau ;
d) mettre en forme le sol obtenu suite à l'étape (c) pour obtenir le matériau de type oxyde poreux et, notamment, le matériau sol-gel poreux comprenant au moins une molécule-sonde.

13. Procédé selon la revendication 12, **caractérisé en ce que** ledit solvant est choisi dans le groupe constitué par un alcool tel que le méthanol, l'éthanol, le propanol ou le butanol, l'acétone, le formamide, la méthyléthylcétone, le chloroforme, le dichlorométhane, l'acide acétique et leurs mélanges.

14. Procédé pour piéger et/ou détecter et éventuellement quantifier au moins un composé soufré volatil tel que défini à la revendication 10 comprenant les étapes consistant à :
i) mettre en contact un mélange gazeux susceptible de contenir au moins un composé soufré volatil tel que défini à la revendication 10 avec un matériau comprenant au moins une molécule-sonde tel que défini à l'une quelconque des revendications 1 à 9 ;
ii) piéger et/ou détecter et éventuellement quantifier le (ou les) composé(s) soufré(s) volatil(s) éventuellement présent(s).

15. Procédé selon la revendication 14, **caractérisé en ce que** la détection de l'étape (i) est effectuée en mesurant la variation d'absorbance, de fluorescence ou de luminescence du matériau tel que défini à l'une quelconque des revendications 1 à 9 lorsqu'il est exposé à un mélange gazeux contenant le (ou les) composé(s) soufré(s) volatil(s) tel(s) que défini(s) à la revendication 10.

16. Système de piégeage et/ou de détection comprenant au moins un matériau comprenant au moins une molécule-sonde selon la revendication 11.

17. Système de piégeage et/ou de détection selon la revendication 16, **caractérisé en ce qu'**il comprend en outre au moins un élément choisi dans le groupe constitué par un système millifluidique pour l'écoulement gazeux; une chambre d'exposition éventuellement étanche, munie de fenêtres optiques et éventuellement d'ouvertures pour le système millifluidique dans laquelle le matériau selon la revendication 11 est placé et mis en contact avec le mélange à analyser; un système de maintien du matériau selon la revendication 11 ; un dispositif d'irradiation ; un système optique de collimation et de focalisation de la lumière d'analyse ; des moyens aptes à véhiculer la lumière ; et un détecteur.
